(19) Europäisches Patentamt
European Patent Office
Office européen des brevets

(11) **EP 4 185 514 B1**

(12) **EUROPÄISCHE PATENTSCHRIFT**

(45) Veröffentlichungstag und Bekanntmachung des Hinweises auf die Patenterteilung:
**30.04.2025 Patentblatt 2025/18**

(21) Anmeldenummer: **21742395.3**

(22) Anmeldetag: **13.07.2021**

(51) Internationale Patentklassifikation (IPC):
**B62M 6/45** (2010.01)       **B62M 6/55** (2010.01)
**B62M 11/14** (2006.01)       **B62J 45/412** (2020.01)
**B62J 45/411** (2020.01)

(52) Gemeinsame Patentklassifikation (CPC):
**B62M 6/45; B62M 6/55; B62M 11/145;**
B62J 45/411; B62J 45/412

(86) Internationale Anmeldenummer:
**PCT/EP2021/069389**

(87) Internationale Veröffentlichungsnummer:
**WO 2022/017859 (27.01.2022 Gazette 2022/04)**

(54) **VERFAHREN ZUR STEUERUNG EINER ANTRIEBSVORRICHTUNG EINES FAHRRADS, ANTRIEBSVORRICHTUNG FÜR EIN FAHRRAD UND FAHRRAD**

METHOD FOR CONTROLLING A DRIVE DEVICE OF A BICYCLE, DRIVE DEVICE FOR A BICYCLE, AND BICYCLE

PROCÉDÉ DE COMMANDE D'UN DISPOSITIF D'ENTRAÎNEMENT D'UNE BICYCLETTE, DISPOSITIF D'ENTRAÎNEMENT POUR UNE BICYCLETTE ET BICYCLETTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.07.2020 DE 102020209373**

(43) Veröffentlichungstag der Anmeldung:
**31.05.2023 Patentblatt 2023/22**

(73) Patentinhaber: **Robert Bosch GmbH**
**70442 Stuttgart (DE)**

(72) Erfinder:
• **BARTH, Daniel**
**70771 Leinfelden-Echterdingen (DE)**
• **PROETZSCH, Martin**
**74080 Heilbronn (DE)**

(56) Entgegenhaltungen:
**EP-A1- 3 395 663       US-A1- 2019 162 275
US-B2- 10 266 229**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Steuerung einer Antriebsvorrichtung eines Fahrrads, wobei das Verfahren eine Erfassung einer Drehzahl der Tretachse und eine Erzeugung einer Stell-Motordrehzahl in Abhängigkeit der erfassten Drehzahl zur Einstellung eines Übersetzungsverhältnisses eines Planetengetriebes umfasst. Die Erfindung umfasst des Weiteren eine Antriebsvorrichtung für ein Fahrrad, wobei die Antriebsvorrichtung ein Planetengetriebe und einen Stell-Elektromotor zur Erzeugung der Stell-Motordrehzahl aufweist. Ferner betrifft die Erfindung ein Fahrrad mit der Antriebsvorrichtung.

Stand der Technik

Die Schrift DE 10 2016 207 035 A1 offenbart ein Elektrofahrrad mit zusätzlich zum Elektromotor im Tretlager angeordnetem Schaltgetriebe, ausgeführt als Planetengetriebe. Das Schaltgetriebe weist eine begrenzte Anzahl an schaltbaren Übersetzungsverhältnissen auf und benötigt einen relativ großen Bauraum.

In dem Dokument DE 10 2013 012 160 A1 ist ein stufenloses Getriebe für ein Fahrrad offenbart, welches Doppelkegelrollen aufweist. Das Getriebe weist einen reduzierten Wirkungsgrad auf und benötigt einen relativ großen Bauraum.

Die Schrift WO 2010/092331 A1 offenbart ein Getriebe eines Fahrrads an der Tretachse, welches ein Planetengetriebe aufweist. Die Übersetzung des Planetengetriebes kann ein Nutzer durch Einstellung einer Leistungsverteilung zwischen zwei Elektromaschinen variieren.

Das Dokument EP 2 841 328 B1 offenbart eine Antriebseinheit für ein Fahrrad mit einem ersten und einem zweiten Elektromotor sowie einem Planetengetriebe. Das Dokument DE 10 2013 012 208 B4 offenbart ein elektrisches Antriebssystem für ein mit Muskelkraft betriebenes Fahrzeug.

EP 3 395 663 A1 offenbart alle Merkmale des Oberbegriffs von Anspruch 1.

Die in den bekannten Dokumenten des Standes der Technik offenbarten Vorrichtungen beziehungsweise Verfahren resultieren beim Aufbringen einer Trittkraft des Nutzers auf Pedale des Fahrrads jeweils in einem indirekten Fahrverhalten des Fahrrads. Der Radfahrer empfindet insbesondere den Widerstand einer Drehung der Pedalkurbeln bei Erhöhung seiner Trittkraft als zu gering, da die Steuerung der Motoren gegenüber dem Moment der erhöhten Trittkraft auf die Pedale verzögert erfolgt. Insbesondere erfolgt regelmäßig bei hohen Fahrerdrehmomenten ein wahrnehmbares Durchrutschen wenigstens eines Rotors zumindest eines der jeweiligen Elektromotoren, da das Fahrerdrehmoment des Nutzers nicht unmittelbar am Antriebsrad oder an einer anderen Fahrradkomponente wie dem Rahmen beziehungsweise dem Gehäuse der Antriebsvorrichtung abgestützt wird.

Unter indirektem Fahrgefühl beziehungsweise indirektem Fahrverhalten wird folglich ein geringer Widerstand der Pedale gegen ein Aufbringen einer Trittkraft durch den Radfahrer und eine langsame Reaktion der Antriebsvorrichtung auf veränderte Trittkräfte beziehungsweise auf eine Drehzahländerung der Tretachse verstanden.

Die Aufgabe der vorliegenden Erfindung ist es, ein elektrisch mittels eines Elektromotors schaltbares Fahrradgetriebe zu verbessern, insbesondere zur Erzeugung eines direkteren Fahrverhaltens des Fahrrads.

Offenbarung der Erfindung

Die vorstehende Aufgabe wird erfindungsgemäß entsprechend der unabhängigen Ansprüche 1, 13 und 26 gelöst.

Die Erfindung betrifft ein Verfahren zur Steuerung einer Antriebsvorrichtung eines Fahrrads nach Anspruch 1.

Das erfindungsgemäße Verfahren weist eine Erfassung einer Drehzahl der Tretachse auf. Die Erfassung der Drehzahl der Tretachse ist insbesondere dazu eingerichtet, eine Änderung der Drehzahl der Tretachse vorteilhafterweise innerhalb einer Zeitspanne von kleiner oder gleich zwanzig, zehn oder fünf Millisekunden oder von kleiner oder gleich einer Millisekunde zu erkennen. Dazu wird die Drehzahl der Tretachse vorteilhafterweise mittels wenigstens eines Drehzahlsensors erfasset, beispielsweise mittels eines Inkrementalgeber oder eines kontinuierlich arbeitenden Messsystems der Antriebsvorrichtung, wobei der Drehzahlsensor zur Erfassung der Drehzahl der Tretachse insbesondere mittels einer Hochtreiber-Getriebestufe mit der Tretachse verbunden ist. Anschließend wird eine Stell-Motordrehzahl mittels des Stell-Elektromotors in Abhängigkeit der erfassten Drehzahl der Tretachse zur Einstellung eines Übersetzungsverhältnisses des Planetengetriebes zwischen der Tretachse und dem Abtriebsritzel erzeugt, insbesondere in Abhängigkeit eines aktuell eingestellten Stell-Verhältnisses zwischen der Tretachse und dem Abtriebsritzel beziehungsweise in Abhängigkeit des aktuell eingestellten Übersetzungsverhältnisses. Bei der Erzeugung der Stell-Motordrehzahl wird die Stell-Motordrehzahl des Stell-Elektromotors erfindungsgemäß innerhalb einer Zeitspanne von kleiner oder gleich zwanzig Millisekunden nach einer Änderung der erfassten Drehzahl angepasst. Mit anderen Worten wird die Stell-Motordrehzahl vorteilhafterweise schnell, das heißt innerhalb der Zeitspanne von kleiner oder gleich zwanzig Millisekunden, an eine plötzlich auftretende Trittkraftänderung des Radfahrers beziehungsweise eine schlagartig veränderte Drehzahl der Tretachse angepasst. Vorzugsweise wird die Stell-Motordrehzahl nach einer Änderung der erfassten Drehzahl an der Tretachse innerhalb einer Zeitspanne von kleiner oder gleich zehn Millisekunden, innerhalb einer Zeitspanne von kleiner oder gleich fünf Millisekunden oder innerhalb einer Zeitspanne von kleiner oder gleich einer Millisekunde nach einer Änderung der erfassten Drehzahl angepasst. Durch das Verfahren wird auch beim plötzlichen Aufbringen einer größeren Trittkraft auf die Pedale des Fahrrads beziehungsweise einer schlagartigen Änderung der Drehzahl der Tretachse ein Durchrutschen des Rotors des Stell-Elektromotors vermieden und ein direktes Fahrgefühl für den Radfahrer erzeugt.

Unter direktem Fahrgefühl beziehungsweise direktem Fahrverhalten wird ein großer Widerstand der Pedale gegen ein Aufbringen einer Trittkraft durch den Radfahrer und eine sehr schnelle Reaktion der Antriebsvorrichtung auf veränderte Trittkräfte beziehungsweise auf eine Drehzahländerung der Tretachse verstanden. Darüber hinaus lässt sich vorteilhafterweise durch das mittels des Stell-Elektromotors einstellbare Übersetzungsverhältnis der Wartungsaufwand zum Einstellen oder zur Pflege gegenüber einer herkömmlichen Kettenschaltung reduzieren.

Des Weiteren ist ein Stell-Verhältnis zwischen der erfassten Drehzahl der Tretachse und der Stell-Motordrehzahl des Stell-Elektromotors vorteilhafterweise einstellbar, so dass das Übersetzungsverhältnis des Planetengetriebes zwischen der Tretachse und dem Abtriebsritzel elektrisch variiert beziehungsweise angepasst werden kann. Diese Anpassung des Übersetzungsverhältnisses beziehungsweise des Stell-Verhältnisses erfolgt insbesondere stufenlos oder alternativ in diskreten Stufen. Das Verfahren resultiert ferner in einer nahezu zugunterbrechungsfreien und unter Last schaltbaren Anpassung des Stell-Verhältnisses beziehungsweise eines Übersetzungsverhältnisses, so dass ein direktes Fahrgefühl beim Schalten eines Übersetzungsverhältnisses beziehungsweise eines Gangs resultiert. Ferner wird durch das Verfahren vorteilhafterweise ein elektrischer Wechsel eines Übersetzungsverhältnisses ermöglicht, welcher besonders leise und nahezu verschleißfrei erfolgt.

In einer besonders bevorzugten Ausführung wird bei der Erzeugung der Stell-Motordrehzahl das Stell-Verhältnis zwischen der erfassten Drehzahl der Tretachse und der Stell-Motordrehzahl des Stell-Elektromotors zumindest während einer viertel Umdrehung der Tretachse, insbesondere mit einer Toleranz von kleiner oder gleich zwanzig Prozent, konstant gehalten. Dadurch resultiert vorteilhafterweise in dieser Zeitspanne, das heißt während der zumindest viertel Umdrehung der Tretachse, ein konstantes Übersetzungsverhältnis zwischen der Tretachse und dem Abtriebsritzel. Insbesondere wird das eingestellte Verhältnis zwischen der erfassten Drehzahl der Tretachse und der Stell-Motordrehzahl mindestens während einer halben Umdrehung der Tretachse oder besonders bevorzugt während mindestens einer Umdrehung der Tretachse, insbesondere mit einer Toleranz von kleiner oder gleich zwanzig Prozent, konstant gehalten. Die zulässige Toleranz beziehungsweise Abweichung vom konstant zuhaltenden Stell-Verhältnis hängt von der Übersetzung zwischen dem Stell-Elektromotor und der ersten Eingangskomponente des Planetengetriebes, insbesondere von dem Übersetzungsverhältnis des Drehzahlreduziergetriebes, ab. Dadurch resultiert für den Radfahrer ein direktes Fahrgefühl, da sich der Rotor des Stell-Elektromotors nicht für eine gegenüber einer Umdrehung der Tretachse längere Zeitspanne gegenüber einer aufgebrachten Trittfrequenz des Radfahrers wegdrehen kann beziehungsweise ein konstanter Widerstand der Pedale gegen die Trittkraft des Fahrers vorliegt. Des Weiteren resultiert diese Ausführung in einem Fahrverhalten beim Treten des Radfahrers beziehungsweise Pedalieren, welches dem Fahrverhalten herkömmlicher Fahrräder mit mechanischen Kettenschaltungen nahekommt.

In einer Ausgestaltung der Erfindung ist es vorgesehen, eine Eingabe des Radfahrers zu einem gewünschten Übersetzungsverhältnis zwischen der Tretachse und dem Abtriebsritzel zu erfassen. Die Eingabe des Radfahrers zu einem gewünschten Übersetzungsverhältnis kann beispielsweise mittels eines Drehgriffs am Lenker des Fahrrads erfolgen beziehungsweise eingestellt werden. Anschließend wird das Stell-Verhältnisses zwischen der erfassten Drehzahl der Tretachse und der Stell-Motordrehzahl des Stell-Elektromotors in Abhängigkeit der erfassten Eingabe des Radfahrers angepasst. Dadurch resultiert vorteilhafterweise ein manuell schaltbares Übersetzungsverhältnis zwischen der Tretachse und dem Abtriebsritzel beziehungsweise des Planetengetriebes, wobei das Übersetzungsverhältnis manuell insbesondere in diskreten Stufen geschaltet wird.

In einer weiteren Ausgestaltung der Erfindung ist es vorgesehen, das Stell-Verhältnis zwischen der erfassten Drehzahl der Tretachse und der Stell-Motordrehzahl des Stell-Elektromotors in Abhängigkeit der erfassten Drehzahl der Tretachse anzupassen. Mit anderen Worten erfolgt vorteilhafterweise eine automatische Änderung des Übersetzungsverhältnisses in Abhängigkeit der erfassten Drehzahl der Tretachse des Fahrrads beziehungsweise der aktuellen Kadenz des Radfahrers beziehungsweise der aktuellen Trittfrequenz des Radfahrers. Das Stell-Verhältnis wird insbesondere angepasst, wenn die erfasste Drehzahl einen unteren Drehzahl-Schwellenwert unterschreitet oder die erfasste Drehzahl einen oberen Drehzahl-Schwellenwert überschreitet. Mit anderen Worten resultiert der Vorteil, dass das Übersetzungsverhältnis teilautomatisch oder automatisch in Abhängigkeit der aktuellen Kadenz beziehungsweise der aktuellen Trittfrequenz des Radfahrers angepasst wird. Bevorzugt wird das Übersetzungsverhältnis erhöht, wenn die Kadenz den oberen Drehzahl-Schwellenwert überschreitet, welcher beispielsweise in einem Bereich von 100 bis 150 Umdrehungen der Tretachse pro Minute liegt, und/oder das Übersetzungsverhältnis wird erniedrigt, wenn die Kadenz den unteren Drehzahl-Schwellenwert unterschreitet, welcher beispielsweise in einem Bereich kleiner oder gleich 70 Umdrehungen der Tretachse pro Minute liegt. Diese automatische Anpassung des Stell-Verhältnisses beziehungsweise des Übersetzungsverhältnisses dieser weiteren Ausgestaltung resultiert in einem direkten Fahrgefühl für den Radfahrer.

In einer ferneren Ausgestaltung der Erfindung ist es vorgesehen, ein Fahrerdrehmoment an der Tretachse zu erfassen, beispielsweise mittels eines Drehmomentsensors. Der Drehmomentsensor erfasst bevorzugt einen inversen magentostriktiven Effekt an der Tretachse oder an einer mit der Tretachse drehfest verbundenen Welle. In dieser Ausgestaltung der Erfindung ist es vorgesehen, das Stell-Verhältnis zwischen der erfassten Drehzahl der Tretachse und der Stell-Motordrehzahl des Stell-Elektromotors in Abhängigkeit des erfassten Fahrerdrehmoments anzupassen. Da das Stell-Verhältnis das Übersetzungsverhältnis des Planetengetriebes zwischen der Tretachse und dem Abtriebsritzel repräsentiert, wird in dieser Ausgestaltung das Übersetzungsverhältnis beziehungsweise das Stell-Verhältnis vorteilhafterweise teilautomatisch oder automatisch in Abhängigkeit des erfassten Fahrerdrehmoments angepasst. Bevorzugt wird das Stell-Verhältnis angepasst, wenn das erfasste Fahrerdrehmoment einen unteren Fahrerdrehmoment-Schwellenwert unterschreitet oder das erfasste Fahrerdrehmoment einen oberen Fahrerdrehmoment-Schwellenwert überschreitet. Besonders bevorzugt wird das Übersetzungsverhältnis erhöht, wenn das erfasste Fahrerdrehmoment einen unteren Fahrerdrehmoment-Schwellenwert unterschreitet, und erniedrigt, wenn das erfasste Fahrerdrehmoment einen oberen Fahrerdrehmoment-Schwellenwert überschreitet. Diese automatische Anpassung des Stell-Verhältnisses beziehungsweise des Übersetzungsverhältnisses resultiert in einem direkten Fahrgefühl für den Radfahrer.

Des Weiteren kann es in einer Ausgestaltung der Erfindung vorgesehen sein, dass eine Geschwindigkeit des Fahrrads und/oder eine Steigung einer Fahrtstrecke erfasst werden. Anschließend erfolgt eine Anpassung des Stell-Verhältnisses zwischen der erfassten Drehzahl der Tretachse und der Stell-Motordrehzahl des Stell-Elektromotors in Abhängigkeit der erfassten Fahrradgeschwindigkeit und/oder der erfassten Steigung der Fahrtstrecke. Dadurch resultiert der Vorteil, dass eine geschwindigkeits- und/oder steigungsabhängige teilautomatische oder automatische Anpassung des Stell-Verhältnisses beziehungsweise des Übersetzungsverhältnisses resultiert, beispielsweise wird bei einer abwärts gerichteten Fahrt des Fahrrads an einer Steigung der Fahrtstrecke in Abhängigkeit der aktuellen Geschwindigkeit des Fahrrads automatisch in ein hohes Übersetzungsverhältnis geschaltet. Die automatische Anpassung des Stell-Verhältnisses beziehungsweise des Übersetzungsverhältnisses dieser Ausgestaltung resultiert in einem direkten Fahrgefühl für den Radfahrer, da dem Radfahrer insbesondere ein an die Geschwindigkeit des Fahrrads angepasster Widerstand gegen das Aufbringen einer Trittkraft bereitgestellt wird, woraus eine Reaktion des Fahrrads auf eine Trittkraft des Radfahrers auch bei hohen Geschwindigkeiten erzwungen wird.

In einer Ausführung der Erfindung wird, wenn ein Stillstand des Fahrrads in Abhängigkeit einer erfassten Geschwindigkeit, in Abhängigkeit einer erfassten Position des Fahrrads und/oder in Abhängigkeit einer erfassten Raddrehzahl des Fahrrads erkannt wird, das Stell-Verhältnis auf einen vorgegebenen Startsollwert eingestellt. Dadurch wird vorteilhafterweise ein Übersetzungsverhältnis des Planetengetriebes zwischen der zweiten Eingangskomponente beziehungsweise der Tretachse und der Ausgangskomponente beziehungsweise dem Abtriebsritzel eingestellt, welches ein direktes Fahrgefühl beim Start einer Fahrt mit dem Fahrrad verursacht beziehungsweise, wodurch das Fahrerdrehmoment bei einem Fahrtstart aus dem Stillstand des Fahrrads gut mittels des Stell-Elektromotors abgestützt wird.

Es kann vorgesehen sein, dass bei einer Anpassung des Stell-Verhältnisses das Stell-Verhältnis aus einer vorgegebenen Liste mit diskreten Werten gewählt wird, wobei diese diskreten Werte jeweils zueinander unterschiedliche vorgegebene Übersetzungsverhältnisse repräsentieren. Bevorzugt liegen die vorgegebenen Übersetzungsverhältnisse zwischen der Tretachse und dem Abtriebsritzel in einem Bereich zwischen 0,5 und 20, besonders bevorzugt in einem Bereich zwischen 1 und 10, wobei die diskreten Werte aus der vorgegebenen Liste beispielsweise 3 bis 30 Abstufungen in diesen Übersetzungsverhältnis-Bereichen repräsentieren. Durch diese Ausführung kann mit geringem Rechenaufwand eines Steuergerätes, das heißt sehr schnell, eine Anpassung des Stell-Verhältnisses erfolgen und somit ein sehr direktes Fahrverhalten eingestellt werden.

In einer Weiterführung kann es vorgesehen sein, dass das Stell-Verhältnis so angepasst wird, dass kontinuierlich eine Regelung der Drehzahl der Tretachse auf einen Sollumdrehungswert oder einen Sollumdrehungswertbereich erfolgt, insbesondere wenn ein kontinuierliches Aufbringen einer Trittkraft über mehrere Umdrehungen der Tretachse erkannt wird, wobei der Sollumdrehungswert im Bereich beziehungsweise der Sollumdrehungswertbereich besonders bevorzugt zwischen 60 und 100 Umdrehungen pro Minute liegt. Mit anderen Worten wird vorteilhafterweise in dieser Weiterführung das Übersetzungsverhältnis durch Anpassung des Stell-Verhältnisses kontinuierlich geändert, so dass unabhängig vom Wind oder einer Steigung der Fahrtstrecke eine Drehzahl der Tretachse resultiert, welche vorteilhafterweise den, insbesondere durch den Radfahrer durch Eingabe wählbaren, Sollumdrehungswert repräsentiert. Vorteilhafterweise wird das Stell-Verhältnisses zu dem Sollumdrehungswert oder dem Sollumdrehungswertbereich kontinuierlich bestimmt und nach beispielsweise jeder halben Umdrehung der Tretachse angepasst beziehungsweise eingestellt. Dadurch resultiert der Vorteil einer sehr gleichbleibenden Belastung für den Radfahrer. Außerdem resultiert vorteilhafterweise ein direktes und erwartbares Fahrgefühl.

In einer bevorzugten Weiterführung des Verfahrens wird mindestens eine aktuelle Pedalkurbelposition erfasst. Vorteilhafterweise ist jeweils eine Pedalkurbel an jedem Ende der Tretachse drehfest mit der Tretachse verbunden und die Pedalkurbeln weisen zueinander gegenüber der Tretachse einen Winkelversatz um 180° auf. Anschließend erfolgt die Anpassung des Stell-Verhältnisses zusätzlich in Abhängigkeit der erfassten aktuellen Pedalkurbelposition. Das Stell-Verhältnis wird insbesondere nur zu einem Zeitpunkt angepasst, wenn ein Betrag eines Winkels zwischen der erfassten aktuellen Pedalkurbelposition und einer oberen oder unteren Pedalkurbelposition in einem Bereich kleiner oder gleich 30° liegt. Besonders bevorzugt wird das Stell-Verhältnis nur zu einem Zeitpunkt angepasst, wenn der Betrag des Winkels zwischen der erfassten aktuellen Pedalkurbelposition und der oberen oder unteren Pedalkurbelposition in einem Bereich kleiner oder gleich 10° liegt, insbesondere in einem Bereich kleiner oder gleich 5°. An anderen Pedalkurbelpositionen wird das Stell-Verhältnis vorteilhafterweise nicht angepasst beziehungsweise konstant gehalten. Ein Verlauf einer durch den Radfahrer aufgebrachten Trittkraft während einer Rotation beziehungsweise Umdrehung der Tretachse ist nicht gleichmäßig, stattdessen liegen für die obere und untere Pedalkurbelposition bei der Tretachsenrotation sogenannte Totpunkte vor, welche durch eine niedrige Trittkraft gekennzeichnet sind. Durch diese bevorzugte Weiterführung des Verfahrens wird folglich das Stell-Verhältnis nur angepasst, wenn der Radfahrer keine oder kaum eine Trittkraft aufbringt und somit die Änderung des Stell-Verhältnisses nicht bemerkt. Durch die Anpassung des Stell-Verhältnisses in Abhängigkeit der erfassten aktuellen Pedalkurbelposition im Bereich einer oberen oder unteren Pedalkurbelposition resultiert insbesondere eine zugunterbrechungsfreie und unter Last schaltbare Änderung des Übersetzungsverhältnisses. Es wird ein sehr direktes Fahrgefühl erzeugt.

In einer bevorzugten Ausführung des Verfahrens wird in einem weiteren Schritt ein Fahrerdrehmoment an der Tretachse erfasst, wobei das Fahrerdrehmoment die Trittkraft des Radfahrers repräsentiert. Anschließend wird ein weiteres Motordrehmoment in Abhängigkeit des erfassten Fahrerdrehmoments an der Tretachse mittels eines Antrieb-Elektromotors zur Kraftunterstützung des Radfahrers erzeugt. Der Antrieb-Elektromotor ist vorteilhafterweise mittels eines weiteren Drehzahlreduziergetriebes in Eingriff stehend mit der Ausgangskomponente des Planetengetriebes oder mit der zweiten Eingangskomponente des Planetengetriebes verbunden. Alternativ ist der Antrieb-Elektromotor an einer Vorder- oder Hinterradnabe des Fahrrads, das heißt vorteilhafterweise örtlich getrennt von der Tretachse, angeordnet. Durch diese bevorzugte Ausführung des Verfahrens resultieren eine Vielzahl an technischen Vorteilen, insbesondere resultiert ein elektrisch unterstütztes Fahrrad beziehungsweise ein Elektrofahrrad, welches dazu eingerichtet ist, den Fahrer mittels des weiteren Motordrehmoments zu unterstützen. Beispielsweise kann der Radfahrer in dieser Ausführung mit reduziertem Aufwand oder ohne körperlichen Mehraufwand eine Steigung einer Fahrtstrecke mit einer höheren Geschwindigkeit passieren oder eine beliebige Strecke in kürzerer Zeit zurücklegen. Ferner kann die Kraftunterstützung des Radfahrers mittels des Antrieb-Elektromotors in Abhängigkeit des eingestellten Übersetzungsverhältnisses besser abgestimmt beziehungsweise eingestellt werden, so dass insbesondere beim Schalten eines Übersetzungsverhältnisses ein angenehmeres Fahrgefühl resultiert. Insbesondere erfolgt in dieser Ausführung die Erzeugung des weiteren Motordrehmoments in Abhängigkeit eines Wechsels eines Übersetzungsverhältnisses beziehungsweise der Anpassung des Stell-Verhältnisses zur Erzeugung der Stell-Motordrehzahl des Stell-Elektromotors, so dass ein besonders wünschenswertes Fahrgefühl für den Radfahrer beim Schalten resultiert. Falls der Antrieb-Elektromotor an einer Vorder- oder Hinterradnabe angeordnet ist, wird der benötigte Bauraum der Antriebsvorrichtung an der Tretachse vorteilhafterweise reduziert, wodurch die Antriebsvorrichtung für einen Betrachter im Bereich der Tretachse weniger optisch auffällt.

Vorzugsweise kann weiterhin vorgesehen sein, dass eine Eingabe des Radfahrers zu einem gewünschten Generatorbetrieb beziehungsweise einem gewünschten Bremsbetrieb erfolgt. Diese Eingabe kann auch eine gewünschte Notbremsung im Falle einer erkannten Notsituation, beispielsweise eines erkannten bevorstehenden Aufpralls, repräsentieren. Alternativ oder zusätzlich wird ein aktueller Ladezustand einer Batterie des Fahrrads erfasst. Alternativ oder zusätzlich kann eine Steigung der Fahrtstrecke und/oder ein Abstand zu Objekten in der Umgebung des Fahrrads erfasst werden, wobei letzteres beispielsweise mittels eines Abstandssensors, insbesondere mittels einer Kamera, eines Ultraschallsensors, eines Lidar-Sensors und/oder eines Radarsensors erfolgt. In einem weiteren Schritt wird in dieser Ausführung eine Geschwindigkeit des Fahrrads erfasst. Anschließend erfolgt eine Einstellung des Stell-Elektromotors und/oder des Antrieb-Elektromotors in einen Generatorbetriebsmodus in Abhängigkeit der erfassten Eingabe des Radfahrers zum Generatorbetrieb und/oder in Abhängigkeit des erfassten Ladezustands der Batterie und/oder in Abhängigkeit der erfassten Steigung der Fahrtstrecke und/oder in Abhängigkeit des erfassten Abstands zu Objekten in der Umgebung des Fahrrads und in Abhängigkeit der erfassten Geschwindigkeit des Fahrrads. Durch diese Ausführung kann vorteilhafterweise Energie bei einer abwärts gerichteten Fahrt am Berg zurückgewonnen und/oder das Fahrrad gebremst werden. Diese Ausführung ermöglicht ferner vorteilhafterweise eine kostengünstige und effektive automatische Bremsung bis zur Notbremsung des Fahrrads, welche beispielsweise aus dem Normalbetriebsmodus des Verfahrens in Abhängigkeit einer basierend auf dem erfassten Abstand zu Objekten in der Umgebung erkannten Notsituation erfolgen kann. Diese Ausführung kann in einer Weiterführung außerdem ein Antiblockiersystem für das Vorder- oder Hinterrad unterstützen, da die Bremswirkung mittels des Stell-Elektromotors und/oder des Antrieb-Elektromotors nicht blockierend eingestellt werden kann. Bei dieser Einstellung in den Generatorbetriebsmodus wird die Tretachse insbesondere fixiert. Dadurch drehen die Pedale beziehungsweise die Pedalkurbeln im Generatorbetriebsmodus nicht mit, wodurch das Fahren im Generatorbetriebsmodus komfortabel und/oder wenig verletzungsanfällig für den Radfahrer ist.

In einer weiteren Weiterführung des Verfahrens erfolgt eine Erfassung einer Eingabe des Radfahrers zu einem gewünschten manuellen Betrieb ohne elektrische Unterstützung. Alternativ oder zusätzlich wird ein aktueller Ladezustand eines Batteriemoduls des Fahrrads erfasst. Alternativ oder zusätzlich wird in dieser Weiterführung die aktuelle Geschwindigkeit des Fahrrads erfasst. Anschließend wird die erste Eingangskomponente des Planetengetriebes, insbesondere mittels einer drehfest mit der ersten Eingangskomponente verbundenen Bremsscheibe, in Abhängigkeit der erfassten Eingabe des Radfahrers zu einem gewünschten manuellen Betrieb und/oder in Abhängigkeit des erfassten aktuellen Ladezustands des Batteriemoduls und/oder in Abhängigkeit der erfassten Geschwindigkeit des Fahrrads, insbesondere mittels einer Bremse, mit dem Gehäuse der Antriebseinheit drehfest fixiert. Durch diese weitere Weiterführung resultiert vorteilhafterweise ein Direktgang zwischen der Tretachse und dem Abtriebsritzel, so dass das Fahrrad auch ohne Betrieb des Stell-Elektromotors fortbewegt werden kann. Es kann darüber hinaus vorgesehen sein, beim Starten einer Fahrt diesen Direktgang einzustellen beziehungsweise die erste Eingangskomponente an das Gehäuse zu fixieren, so dass vorteilhafterweise beim Start der Fahrt beziehungsweise bei einem hohen Fahrerdrehmoment ein sehr direktes Fahrgefühl resultiert.

Die Erfindung betrifft auch eine Antriebsvorrichtung für ein Fahrrad, wobei die Antriebsvorrichtung ein Planetengetriebe, einen Stell-Elektromotor und ein Drehzahlreduziergetriebe aufweist, wobei der Stell-Elektromotor mittels des Drehzahlreduziergetriebes mit einer ersten Eingangskomponente des Planetengetriebes und eine Tretachse mit einer zweiten Eingangskomponente des Planetengetriebes drehfest oder im Eingriff stehend verbunden sind. Eine von den Eingangskomponenten unterschiedliche Ausgangskomponente des Planetengetriebes ist mit einem Abtriebsritzel der Antriebsvorrichtung, insbesondere drehfest, verbunden. Des Weiteren ist ein Steuergerät der Antriebsvorrichtung dazu eingerichtet, das erfindungsgemäße Verfahren durchzuführen. Somit ist das Steuergerät vorteilhafterweise dazu eingerichtet, die Drehzahl der Tretachse mittels wenigstens eines Drehzahlsensors zu erfassen und den Stell-Elektromotor in Abhängigkeit der erfassten Drehzahl der Tretachse zur Erzeugung einer Stell-Motordrehzahl zur Einstellung eines Übersetzungsverhältnisses zwischen der Tretachse und dem Abtriebsritzel anzusteuern, wobei die Stell-Motordrehzahl innerhalb einer Zeitspanne von zwanzig Millisekunden nach einer Änderung der erfassten Drehzahl angepasst wird. Das Ausgangsritzel ist insbesondere mittels einer Kette oder bevorzugt mittels eines Zahnriemens mit der Nabe eines Hinterrads des Fahrrads verbunden, wodurch die Antriebsvorrichtung dazu eingerichtet ist, ein auf die Tretachse aufgebrachtes Fahrerdrehmoment an das Hinterrad zum Antrieb des Fahrrads zu übertragen. Die Antriebsvorrichtung ist vorteilhafterweise kompakt beziehungsweise weist einen kleinen Bauraum auf. Des Weiteren resultiert der Vorteil, dass die Antriebsvorrichtung dem Radfahrer ein direktes Fahrgefühl beim Fahren vermittelt. Die Antriebsvorrichtung umfasst vorteilhafterweise mit anderen Worten ein elektrisch schaltbares Planetengetriebe, wobei ein Wechsel eines Übersetzungsverhältnisses elektrisch gesteuert wird und somit besonders leise und nahezu verschleißfrei erfolgt. Ferner resultiert vorteilhafterweise eine elektrisch stellbare Gangschaltung, welche eine manuelle, teilautomatische und/oder automatische Anpassung eines Übersetzungsverhältnisses des Planetengetriebes zwischen der Tretachse und dem Abtriebsritzel der Antriebsvorrichtung ermöglicht.

Vorzugsweise ist das Steuergerät dazu eingerichtet, ein Stell-Verhältnis zwischen der erfassten Drehzahl der Tretachse und der Stell-Motordrehzahl zumindest während einer viertel Umdrehung der Tretachse konstant zu halten, insbesondere wird das Stell-Verhältnis zumindest während einer halben Umdrehung der Tretachse und besonderes bevorzugt zumindest während einer Umdrehung der Tretachse konstant gehalten. Durch diese Ausgestaltung der Antriebsvorrichtung wird das direkte Fahrgefühl des Radfahrers beim Fahren verstärkt.

In einer besonders bevorzugten Ausgestaltung der Antriebsvorrichtung weist der Drehzahlsensor wenigstens einen mechanischen, optischen, induktiven und/oder elektrischen Inkrementalgeber oder ein kontinuierlich arbeitendes Messsystem zur Erfassung der Drehzahl der Tretachse beziehungsweise zur Erfassung einer Drehzahländerung beziehungsweise Winkeländerung der Tretachse auf. Bevorzugt ist der Drehzahlsensor, insbesondere der Inkrementalgeber oder das kontinuierlich arbeitende Messsystem zur Erfassung der Drehzahl, dazu eingerichtet, eine Änderung einer Winkelgeschwindigkeit zur Tretachsenrotation beziehungsweise eine Drehzahländerung innerhalb von zwanzig Millisekunden, insbesondere innerhalb von zehn Millisekunden und besonders bevorzugt innerhalb von einer Millisekunde, zu erkennen. Durch diese Ausführung der Antriebsvorrichtung resultiert eine zuverlässige sehr schnelle Erfassung der Drehzahl und somit das direktere Fahrgefühl für den Radfahrer.

In einer Weiterführung ist der Inkrementalgeber oder das kontinuierlich arbeitende Messsystem der Antriebsvorrichtung zur Erfassung der Drehzahl der Tretachse mittels einer Hochtreiber-Getriebestufe mit der Tretachse verbunden. Durch diese Weiterführung kann eine Änderung der Drehzahl der Tretachse besonders schnell und die Drehzahl und/oder eine Drehzahländerung sehr genau erfasst werden, so dass die Stell-Motordrehzahl des Stell-Elektromotors besonders schnell nach einer Änderung der erfassten Drehzahl angepasst werden und somit ein Durchrutschen des Rotors des Stell-Elektromotors zuverlässig in allen Fahrsituationen vermieden werden kann. Es resultiert ein besonders direktes Fahrgefühl für den Radfahrer.

In einer bevorzugten Ausgestaltung der Antriebsvorrichtung ist das Planetengetriebe koaxial um die Tretachse angeordnet. Die Tretachse ist in dieser bevorzugten Ausgestaltung drehfest mit dem Planetenträger des Planetengetriebes verbunden. Der Stell-Elektromotor ist mittels des Drehzahlreduziergetriebes in Eingriff stehend mit einer Außenverzahnung des Hohlrads des Planetengetriebes verbunden. Das Sonnenrad des Planetengetriebes ist des Weiteren drehfest auf einer koaxial um die Tretachse laufenden Ausgangshohlwelle angeordnet. Diese Ausgangshohlwelle ist drehfest mit dem Ausgangsritzel der Antriebsvorrichtung verbunden. Durch diese Ausgestaltung resultiert eine sehr kompakte und leichte Antriebsvorrichtung.

In einer weiteren Ausführung ist das Steuergerät dazu eingerichtet, eine Eingabe des Radfahrers zu einem gewünschten Übersetzungsverhältnis zwischen der Tretachse und dem Abtriebsritzel mittels eines Gangwahlmittels zu erfassen. Das Gangwahlmittel ist insbesondere am Lenker des Fahrrads angeordnet und beispielsweise mittels eines Kabels oder kabellos mittels eines Funkprotokolls, insbesondere mittels Bluetooth, mit dem Steuergerät verbunden. Das Steuergerät ist des Weiteren dazu eingerichtet, das Stell-Verhältnis zwischen der erfassten Drehzahl der Tretachse und der Stell-Motordrehzahl in Abhängigkeit der erfassten Eingabe des Radfahrers anzupassen. Durch diese Ausführung ist das Steuergerät vorteilhafterweise dazu eingerichtet, ein Übersetzungsverhältnis des Planetengetriebes entsprechend einer erfassten manuellen Eingabe des Radfahrers zu einem gewünschten Gangwechsel zu ändern.

In einer weiteren Ausführung ist das Steuergerät dazu eingerichtet, das Stell-Verhältnis zwischen der erfassten Drehzahl der Tretachse und der Stell-Motordrehzahl in Abhängigkeit der erfassten Drehzahl und/oder in Abhängigkeit eines mittels eines Drehmomentsensors erfassten Fahrerdrehmoments an der Tretachse anzupassen. Bevorzugt ist das Steuergerät dazu eingerichtet, das Stell-Verhältnis anzupassen, wenn die erfasste Drehzahl einen unteren Drehzahl-Schwellenwert unterschreitet, und/oder, wenn das erfasste Fahrerdrehmoment einen unteren Fahrerdrehmoment-Schwellenwert unterschreitet, und/oder, wenn die erfasste Drehzahl einen oberen Drehzahl-Schwellenwert überschreitet, und/oder, wenn das erfasste Fahrerdrehmoment einen oberen Fahrerdrehmoment-Schwellenwert überschreitet. Diese Ausführung resultiert vorteilhafterweise in einer teilautomatischen oder automatischen Anpassung des Übersetzungsverhältnisses beziehungsweise des Stell-Verhältnisses, wodurch die Fahrt des Radfahrers komfortabel und das Fahrgefühl sehr direkt wird.

In einer weiteren vorteilhaften Ausführung ist das Steuergerät dazu eingerichtet, eine Geschwindigkeit des Fahrrads zu erfassen. Das Steuergerät erfasst die Geschwindigkeit insbesondere mittels eines Geschwindigkeitssensors. Der Geschwindigkeitssensor weist beispielsweise einen Reed-Sensor am Vorder- oder Hinterrad und/oder einen Positionssensor für ein globales Navigationssatellitensystem auf. Alternativ oder zusätzlich ist das Steuergerät dazu eingerichtet, eine Steigung einer Fahrtstrecke zu erfassen, insbesondere mittels einer inertialen Messeinheit. Des Weiteren ist das Steuergerät in dieser Ausführung dazu eingerichtet, das Stell-Verhältnis zwischen der erfassten Drehzahl der Tretachse und der Stell-Motordrehzahl in Abhängigkeit der erfassten Fahrradgeschwindigkeit und/oder der erfassten Steigung der Fahrtstrecke anzupassen. Durch diese Ausführung wird vorteilhafterweise eine teilautomatische oder automatische Anpassung des Übersetzungsverhältnisses beziehungsweise des Stell-Verhältnisses erreicht oder eine teilautomatische oder automatische Anpassung des Übersetzungsverhältnisses beziehungsweise des Stell-Verhältnisses verbessert, wodurch die Fahrt des Radfahrers besonders komfortabel und das Fahrgefühl sehr direkt wird.

Es kann ferner bevorzugt vorgesehen sein, dass das Steuergerät der Antriebsvorrichtung dazu eingerichtet ist, mindesten eine aktuelle Pedalkurbelposition zu erfassen. Diese Erfassung der Pedalkurbelposition erfolgt insbesondere mittels eines Pedalkurbelpositionssensors und/oder mittels eines mechanischen, optischen, induktiven und/oder elektrischen Inkrementalgebers und/oder mittels eines kontinuierlich arbeitenden Messsystems zur Erfassung einer Winkeländerung der Tretachse und/oder mittels Rotorlage-Sensoren des Antrieb- Elektromotors. Das Steuergerät ist ferner dazu eingerichtet, das Stell-Verhältnis in Abhängigkeit der erfassten aktuellen Pedalkurbelposition anzupassen. In dieser Ausführung der Erfindung erfolgt eine Anpassung des Stell-Verhältnisses insbesondere nur im Bereich einer oberen oder unteren Pedalkurbelposition, so dass der Radfahrer die Anpassung des Stell-Verhältnisses durch eine Änderung der Stell-Motordrehzahl aufgrund der reduzierten Trittkraft in diesem Bereich der oberen oder unteren Pedalkurbelposition vorteilhafterweise kaum wahrnehmen kann und somit ein direktes Fahrgefühl auch beim Schalten beziehungsweise bei der Anpassung des Stell-Verhältnisses erhalten bleibt.

In einer bevorzugten Weiterführung weist die Antriebsvorrichtung einen weiteren Antrieb-Elektromotor auf. Der Antrieb-Elektromotor ist mit der Ausgangskomponente des Planetengetriebes oder mit der zweiten Eingangskomponente des Planetengetriebes verbunden, insbesondere jeweils mittels eines weiteren Drehzahlreduziergetriebes. Zwischen dem Antrieb-Elektromotor und dem Planetengetriebe kann vorteilhafterweise ein Motorfreilauf angeordnet sein, wobei der Motorfreilauf dazu eingerichtet ist, im Falle einer Drehzahl der Tretachse kleiner einer Antrieb-Motordrehzahl des Antrieb-Elektromotors oder bei negativer Drehrichtung der Tretachse das Drehzahlreduziergetriebe frei drehbar gegenüber der Tretachse zu schalten. Alternativ ist der Antrieb-Elektromotor an einer Vorderradnabe oder an einer Hinterradnabe des Fahrrads angeordnet. Die Antriebsvorrichtung ist des Weiteren in dieser bevorzugten Weiterführung, insbesondere mittels des Steuergeräts, dazu eingerichtet, mittels eines Drehmomentsensors ein Fahrerdrehmoment an der Tretachse zu erfassen. Der Antrieb-Elektromotor ist ferner, insbesondere mittels des Steuergeräts oder mittels eines weiteren Steuergeräts des Antrieb-Elektromotors, dazu eingerichtet, in Abhängigkeit des erfassten Fahrerdrehmoments angesteuert zu werden. Durch diese bevorzugte Weiterführung resultiert ein Elektrofahrrad, welches vorteilhafterweise dazu eingerichtet ist, zur Kraftunterstützung des Radfahrers ein weiteres Motordrehmoment zu erzeugen. Dadurch kann der Radfahrer beispielsweise seine manuelle Trittkraft beziehungsweise das Fahrerdrehmoment bei gleichbleibender Geschwindigkeit des Fahrrads reduzieren, da ein Teil der Leistung von dem Antrieb-Elektromotor durch das weitere Motordrehmoment erzeugt wird. Die Fahrt des Radfahrers wird durch diese bevorzugte Weiterführung der Antriebsvorrichtung besonders komfortabel.

In einer weiteren Ausgestaltung der bevorzugten Weiterführung der Antriebsvorrichtung werden die Rotorlage-Sensoren des Antrieb-Elektromotors als Drehzahlsensor zur Erfassung der Drehzahl der Tretachse verwendet. Mit anderen Worten umfasst in dieser Ausgestaltung der zu mindestens eine Drehzahlsensor zur Erfassung der Drehzahl der Tretachse die Rotorlage-Sensoren des Antrieb-Elektromotors. Da der Antrieb-Elektromotor vorteilhafterweise mit einem festen Drehzahl-Verhältnis zur Tretachse dreht und mit hohen Umdrehungszahlen pro Minute betrieben wird, können die Rotorlage-Sensoren die Drehzahl der Tretachse vorteilhafterweise sehr genau erfassen. Dadurch resultiert ein sehr direktes Fahrgefühl für den Radfahrer.

Vorzugsweise ist die Antriebsvorrichtung, insbesondere mittels des Steuergeräts, dazu eingerichtet ist, mittels eines Geschwindigkeitssensors eine Geschwindigkeit des Fahrrads zu erfassen. Der Antrieb-Elektromotor ist außerdem in dieser Ausführung dazu eingerichtet, zusätzlich in Abhängigkeit der erfassten Fahrradgeschwindigkeit angesteuert zu werden. Dadurch resultieren die Vorteile, dass ein Anfahrverhalten beim Start einer Fahrt sowie ein Abriegelverhalten der Antriebsvorrichtung bei Geschwindigkeiten größer einer vorgegebenen Maximalgeschwindigkeit des Fahrrads auf ein direktes Fahrgefühl hin optimiert werden können.

Ferner ist das Steuergerät in einer anderen Ausführung dazu eingerichtet, eine Eingabe des Radfahrers zum Generatorbetrieb und/oder eine Steigung der Fahrtstrecke zu erfassen. Die Steigung wird insbesondere mittels einer inertialen Messeinheit erfasst. In dieser Ausführung ist darüber hinaus vorgesehen, dass das Steuergerät dazu eingerichtet ist, eine Geschwindigkeit des Fahrrads mittels eines Geschwindigkeitssensors zu erfassen. Des Weiteren ist das Steuergerät in dieser Ausführung dazu eingerichtet, den Stell-Elektromotor und/oder den Antrieb-Elektromotor in Abhängigkeit der erfassten Eingabe des Radfahrers zum Generatorbetrieb und/oder der erfassten Steigung der Fahrtstrecke und in Abhängigkeit der erfassten Geschwindigkeit des Fahrrads in einen Generatorbetriebsmodus beziehungsweise in einen Bremsmodus zu schalten beziehungsweise den Generatorbetriebsmodus zu aktivieren. Das Steuergerät ist insbesondere dazu eingerichtet, im aktivierten Generatorbetriebsmodus die Tretachse zu fixieren, wodurch ein ungewolltes Mitdrehen der Pedalkurbeln im Generatorbetriebsmodus vermieden werden kann. Durch diese Ausführung kann die Antriebsvorrichtung vorteilhafterweise eine Bewegungsenergie des Fahrrads und/oder des Radfahrers in elektrische Leistung umwandeln, wobei die erzeugte elektrische Leistung in einer Batterie des Fahrrads gespeichert wird und in einer längeren Kraftunterstützung des Radfahrers resultiert. In dieser Ausführung werden vorteilhafterweise außerdem eine Unterstützung einer Bremsung oder eine automatische Bremsung des Fahrrads ermöglicht, beispielsweise eine Notbremsung.

Des Weiteren kann es vorgesehen sein, dass das Steuergerät dazu eingerichtet ist, eine Eingabe des Radfahrers zu einem gewünschten manuellen Betrieb ohne elektrische Unterstützung und/oder einen aktuellen Ladezustand eines Batteriemoduls des Fahrrads zu erfassen. Das Steuergerät kann ferner anschließend dazu eingerichtet sein, die erste Eingangskomponente des Planetengetriebes, insbesondere mittels einer drehfest mit der ersten Eingangskomponente verbundenen Bremsscheibe, in Abhängigkeit der erfassten Eingabe des Radfahrers zu einem gewünschten manuellen Betrieb und/oder in Abhängigkeit des erfassten aktuellen Ladezustands des Batteriemoduls zu fixieren, insbesondere mittels einer Bremse. Durch diese Ausführung wird auch bei niedrigen Ladezustand des Batteriemoduls oder im Falle eines gewünschten Energiesparens ein direktes und effektives Antreiben des Hinterrads mittels der Antriebsvorrichtung ohne elektrischen Leistungsverbrauch ermöglich.

Die Erfindung betrifft ferner ein Fahrrad mit der erfindungsgemäßen Antriebsvorrichtung.

Weitere Vorteile ergeben sich aus der nachfolgenden Beschreibung von Ausführungsbeispielen mit Bezug zu den Figuren.

Figur 1: Fahrrad mit einer Antriebsvorrichtung mit Stell-Elektromotor

Figur 2: Fahrrad mit Antriebsvorrichtung mit zusätzlichem Antrieb-Elektromotor

Figur 3: Fahrrad mit einer Antriebsvorrichtung, wobei ein Antrieb-Elektromotor an der Hinterradnabe angeordnet ist

Figur 4: Schematischer Getriebeaufbau einer Antriebsvorrichtung mit Stell-Elektromotor

Figur 5: Schematischer Getriebeaufbau einer Antriebsvorrichtung mit zusätzlichem Antrieb-Elektromotor

Figur 6: Ablaufdiagramm des Verfahrens zur Steuerung einer Antriebsvorrichtung

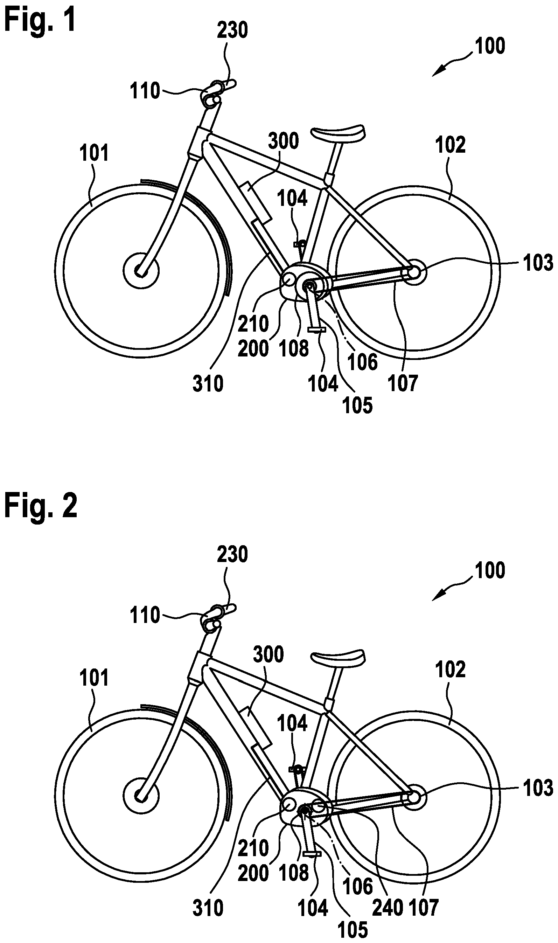

In Figur 1 ist ein Fahrrad 100 mit einer Antriebsvorrichtung 200 mit Stell-Elektromotor 210 schematisch und in einer seitlichen Ansicht dargestellt. Das Fahrrad 100 weist ein Vorderrad 101 und ein Hinterrad 102 auf, wobei das Hinterrad 102 an der Hinterradnabe 103 mittels eines Verbindungselements 107, insbesondere eines Zahnriemens oder einer Kette, und mittels der Antriebsvorrichtung 200 durch eine Trittkraft des Radfahrers auf die Pedale 104 angetrieben wird. Die Pedale 104 sind dazu mit Pedalkurbeln 105 verbunden, welche wiederum mit jeweils unterschiedlichen Enden einer Tretachse 106 verbunden sind. Die Antriebsvorrichtung 200 ist dazu eingerichtet, ein an der Tretachse 106 wirkendes Fahrerdrehmoment mittels eines schaltbaren Planetengetriebes an ein Abtriebsritzel 108 zu übertragen, welches in unmittelbarem Eingriff mit dem Verbindungselement 107 zum Antrieb des Fahrrads 100 steht, wobei ein Übersetzungsverhältnis des Planetengetriebes mittels des Stell-Elektromotors 210 variiert beziehungsweise verändert beziehungsweise angepasst wird. Das Übersetzungsverhältnis des Planetengetriebes der Antriebsvorrichtung 200 kann beispielsweise mittels eines Gangwahlmittels 230 und/oder automatisch in Abhängigkeit der erfassten Drehzahl der Tretachse 106 und/oder eines erfassten Fahrerdrehmoments gewählt beziehungsweise angepasst werden. Das Gangwahlmittel 230 ist bevorzugt am Lenker 110 des Fahrrads 100 angeordnet. Die Einstellung eines Übersetzungsverhältnisses des Planetengetriebes bzw. die Schaltung eines Ganges erfolgt durch eine Anpassung beziehungsweise Veränderung eines Stell-Verhältnisses zwischen der Drehzahl der Tretachse 106 und einer erzeugten Stell-Motordrehzahl des Stell-Elektromotor 210. Mit anderen Worten ist die Antriebsvorrichtung 200 dazu eingerichtet, ein Übersetzungsverhältnis des Planetengetriebes elektrisch durch Anpassung einer Stell-Motordrehzahl zu steuern. Zur Energieversorgung der Antriebsvorrichtung 200, insbesondere des Stell-Elektromotors 210, ist am Fahrrad 100 zusätzlich ein Batteriemodul 300 angeordnet, wobei der elektrische Verbrauch des Stell-Elektromotors 210 gegenüber dem elektrischen Verbrauch eines Antriebsmotors eines Elektrofahrrads gering ist, weshalb das Batteriemodul 300 vergleichsweise klein dimensioniert sein kann. Das Batteriemodul 300 ist mit einem Steuergerät der Antriebsvorrichtung 200 und dem Stell-Elektromotor 210 elektrisch verbunden, insbesondere mittels eines Kabels 310.

Ein Übersetzungsverhältnis i zwischen zwei in Eingriff stehenden Zahnrädern wird als Verhältnis zwischen einer Drehzahl $n_{Eingang}$ einer ersten Komponente beziehungsweise einer Eingangskomponente und einer Drehzahl $n_{Ausgang}$ einer zweiten Komponente beziehungsweise einer Ausgangs- beziehungsweise Abtriebskomponente verstanden, siehe Gleichung (1). Mit anderen Worten treibt die erste Komponente die zweite Komponente mit einer Drehzahl $n_{Eingang}$ und einem Drehmoment $M_{Eingang}$ an, wobei an der zweiten Komponente eine veränderte Drehzahl $n_{Ausgang}$ und ein verändertes Drehmoment $M_{Ausgang}$ in Abhängigkeit des Übersetzungsverhältnisses i resultiert, siehe Gleichung (1). Bei zwei in Eingriff stehenden Zahnrädern ist das Übersetzungsverhältnis i im Allgemeinen abhängig von der Anzahl der Zähne $z_{Eingang}$ die erste Komponente und der Zähne $z_{Ausgang}$ der zweiten Komponente, siehe Gleichung (1).

$$i = \frac{n_{Eingang}}{n_{Ausgang}} = \frac{z_{Ausgang}}{z_{Eingang}} = \frac{M_{Ausgang}}{M_{Eingang}}$$

<div align="right">Gleichung (1)</div>

In Planetengetrieben können prinzipiell drei drehende Komponenten vorliegen, wenn keine der Komponenten an einem Gehäuse oder Rahmen fixiert ist. Planetenräder des Planetengetriebes sind im Allgemeinen zwischen einem Sonnenrad und einem äußeren Hohlrad und an einem Planetenträger drehbar bezüglich eines Eingriffs mit dem Hohl- und Sonnenrad und bezüglich eines Umlaufs um das Sonnenrad an dem Planetenträger drehfest fixiert beziehungsweise angeordnet. Ein allgemeingültiger Zusammenhang zwischen den Drehzahlen der verschiedenen Komponenten beziehungsweise Räder eines Planetengetriebes und den Zähnezahlen dieser Komponenten ist in Gleichung (2) dargestellt, wobei $n_H$ die Drehzahl des Hohlrads, $z_H$ die Zähnezahl des Hohlrads, $n_T$ die Drehzahl des Planetenträgers, $n_S$ die Drehzahl des Sonnenrads und $z_S$ die Zähnezahl des Sonnenrads ist. Gleichung (2) offenbart somit die Abhängigkeit eines jeweiligen Übersetzungsverhältnisses zwischen zwei unterschiedlichen Komponenten des Planetengetriebes von der Drehzahl der weiteren drehenden Komponente des Planetengetriebes, wobei eine der zwei unterschiedlichen Komponenten einen Antrieb beziehungsweise Eingang und die andere einen Abtrieb beziehungsweise Ausgang repräsentieren.

$$n_S = n_T \cdot (1 + i_0) - n_H \cdot i_0 \, , \ i_0 = \frac{z_H}{z_S}$$

<div align="right">Gleichung (2)</div>

Beispielsweise wird ein Übersetzungsverhältnis zwischen dem Planetenträger als Eingang und dem Sonnenrad als Ausgang von der Drehzahl des Hohlrads beeinflusst, wobei beispielsweise die Drehzahl des Hohlrads mittels des Stell-Elektromotors 210 der oben gezeigten Antriebseinheit 200 durch eine erzeugte Stell-Motordrehzahl verändert werden kann. Zu diesem Zweck weist das Hohlrad beispielsweise eine Außenverzahnung auf, welche beispielsweise in Eingriff mit einem Drehzahlreduziergetriebe steht, wobei das Drehzahlreduziergetriebe mit dem Rotor des Stell-Elektromotors in Eingriff stehend verbunden ist. Somit kann das Übersetzungsverhältnis i zwischen dem Planetenträger und dem Sonnenrad eines Planetengetriebes durch eine Änderung der Stell-Motordrehzahl des Stell-Elektromotors angepasst werden, welcher mit dem Hohlrad mittels eines Drehzahlreduziergetriebes in Eingriff stehend verbunden ist.

Beispielsweise folgt für ein gewünschtes beziehungsweise gewähltes Übersetzungsverhältnis zwischen der Tretachse als zweite Eingangskomponente und dem Sonnenrad als Ausgangskomponente von 2 Gleichung (3). Mit einer Standübersetzung von beispielsweise $i_0=10$ folgt Gleichung (4). Ferner liegt beispielsweise ein Drehzahlreduziergetriebe zwischen dem Stell-Elektromotor und dem Hohlrad als erster Eingangskomponente mit einem Übersetzungsverhältnis von 40 vor. Somit folgt für das Übersetzungsverhältnis zwischen der Tretachse und dem Sonnenrad von 2 eine Abhängigkeit der Motordrehzahl $n_M$ von der Drehzahl des drehfest mit der Tretachse $n_T$ verbundenen Planetenträgers gemäß Gleichung (5). Mit anderen Worten muss für ein festes Übersetzungsverhältnis die Motordrehzahl laufend an die Drehzahl der Tretachse beziehungsweise die Trittfrequenz des Radfahrers angepasst werden. Damit der Radfahrer dies als nicht störend empfindet, muss diese Anpassung der Motordrehzahl sehr schnell erfolgen. Dazu muss die Drehzahl der Tretachse hochgenau erfasst werden und die Regelung des Elektromotors ebenfalls schnell angepasst werden.

$$\frac{n_T}{n_S} = 2 \quad \rightarrow \quad n_S = \frac{n_T}{2}$$

$$n_H = n_T \cdot \left[ (1 + i_0) - \frac{1}{2} \right] \cdot \frac{1}{i_0}$$

Gleichung (3)

$$n_H = n_T \cdot 1{,}05$$

Gleichung (4)

$$\frac{n_M}{n_H} = 40 \quad \rightarrow \quad n_M = 42 \cdot n_T$$

Gleichung (5)

In Figur 2 ist ein Fahrrad 100 mit einer Antriebsvorrichtung 200 mit Stell-Elektromotor 210 schematisch in einer seitlichen Ansicht dargestellt, wobei die Antriebsvorrichtung 200 gegenüber Figur 1 zusätzlich mindestens einen Antrieb-Elektromotor 240 aufweist. Der Antrieb-Elektromotor 240 ist dazu eingerichtet, ein weiteres Motordrehmoment in Abhängigkeit eines erfassten Fahrerdrehmoments und/oder in Abhängigkeit einer erfassten Drehzahl der Tretachse beziehungsweise einer erfassten Trittfrequenz zu erzeugen. Somit wird als Fahrrad 100 durch die Antriebsvorrichtung mit dem Antrieb-Elektromotor 240 ein Elektrofahrrad zur Kraftunterstützung des Radfahrers mit einem mittels des Stell-Elektromotors 210 elektrisch steuerbaren Planetengetriebe als schaltbarer Gangschaltung geschaffen. Die Antriebsvorrichtung 200 aus Figur 2 weist aufgrund des zusätzlichen Antrieb-Elektromotors 240 einen größeren Bauraum als die Antriebsvorrichtung aus Figur 1 auf. Die Antriebsvorrichtung 200 aus Figur 2 eine gegenüber der Antriebsvorrichtung aus Figur 1 bevorzugte Ausführung der Erfindung, da ein Elektrofahrrad als Fahrrad 100 zur Energieversorgung des Stell-Elektromotors 210 sowieso ein ausreichend groß dimensioniertes Batteriemodul 300 zur Kraftunterstützung aufweist, wobei das Batteriemodul 300 beispielsweise mittels eines Kabels 310 mit der Antriebsvorrichtung 200 elektrisch verbunden ist. Der Energieverbrauch des Stell-Elektromotors 210 zur Einstellung des Übersetzungsverhältnisses des Planetengetriebes der Antriebsvorrichtung ist im Vergleich zum Energieverbrauch des Antrieb-Elektromotor 240 zur Kraftunterstützung des Radfahrers gering. Es kann vorgesehen sein, dass der Stell-Elektromotor 210 und der Antrieb-Elektromotor 240 ein gemeinsames Steuergerät oder jeweils separate Steuergeräte aufweisen.

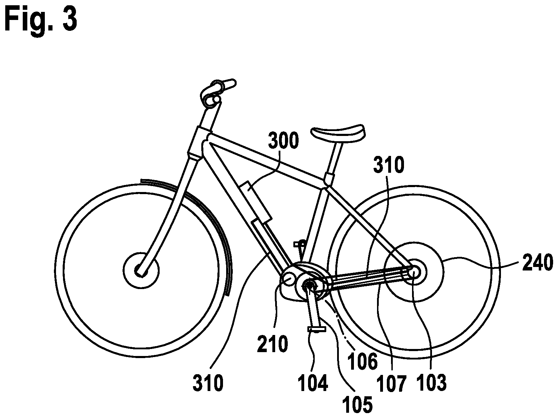

In Figur 3 ist ein Fahrrad mit einer Antriebsvorrichtung 200 mit Stell-Elektromotor 210 schematisch in einer seitlichen Ansicht dargestellt, wobei die Antriebsvorrichtung 200 einen Antrieb-Elektromotor 240 aufweist, wobei dieser Antrieb-Elektromotor 240 gegenüber der Antriebsvorrichtung aus Figur 2 an der Hinterradnabe 103 des Fahrrads 100 angeordnet ist. Mit anderen Worten ist der Antrieb-Elektromotor aus Figur 3 ein Radnabenmotor. Die Ausführung der Antriebsvorrichtung 200 aus Figur 3 ist optisch unauffälliger als die Ausführung der Antriebsvorrichtung 200 aus Figur 2, da sie an der Mittelmotorposition wie die Antriebsvorrichtung 200 aus Figur 1 kleiner baut. Zur Energieversorgung der Antriebsvorrichtung 200, insbesondere des Stell-Elektromotors 210 und des Antrieb-Elektromotors 240, ist am Fahrrad 100 ein Batteriemodul 300 angeordnet. Das Batteriemodul 300 ist mit dem Steuergerät der Antriebsvorrichtung 200 und dem Stell-Elektromotor 210 und/oder dem Antrieb-Elektromotor 240 elektrisch verbunden, beispielsweise mittels jeweils eines Kabels 310. Es kann vorgesehen sein, dass der als Radnabenmotor ausgelegte Antrieb-Elektromotor 240 ein eigenes separates Steuergerät und/oder ein separates Batteriemodul 300 aufweist.

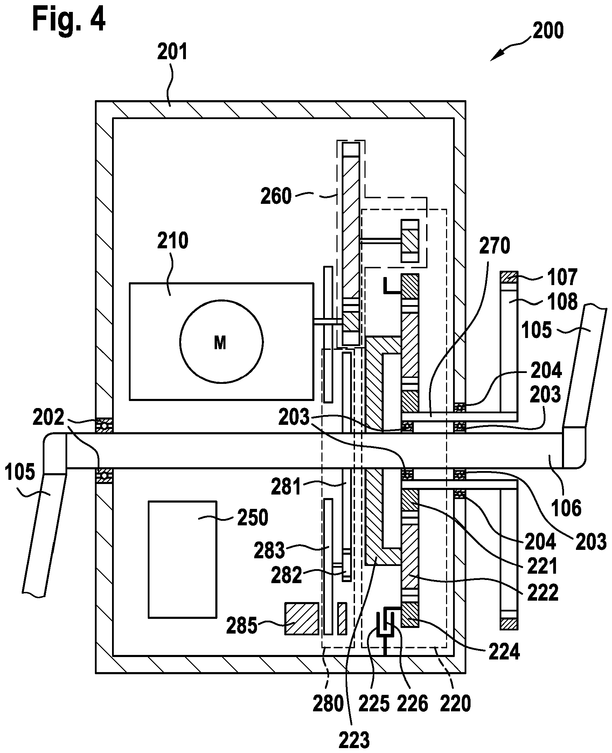

In Figur 4 ist ein Aufbau eines Getriebes einer Antriebsvorrichtung 200 mit Stell-Elektromotor 210 im Querschnitt schematisch dargestellt. Die Antriebseinrichtung weist ein Gehäuse 201 auf. Die Tretachse 106 ist mittels Lagern 202, beispielsweise Kugellagern, drehbar an dem Gehäuse fixiert und verläuft durch jeweils eine Öffnung des Gehäuses 201 und durch das Gehäuse 201 hindurch. Innerhalb des Gehäuses 201 ist ein koaxial um die Tretachse 106 angeordnetes Planetengetriebe 220 angeordnet. Das Abtriebsritzel 108 der Antriebsvorrichtung 200 ist drehfest auf einer koaxial zur Tretachse 106 angeordneten Ausgangshohlwelle 270 angeordnet, wobei die Ausgangshohlwelle 270 mittels Lagern 203 drehbar gegenüber der Tretachse 106 und mittels Lagern 204 drehbar am Gehäuse 201 fixiert ist und durch eine der Öffnungen des Gehäuses 201 verläuft. Das Abtriebsritzel 108 ist dazu eingerichtet, das Verbindungselement 107, insbesondere den Zahnriemen oder die Kette, anzutreiben, wodurch ein Antrieb des Hinterrads 102 des Fahrrads erzeugt wird. Das Sonnenrad 221 des Planetengetriebes 220 ist in diesem Ausführungsbeispiel als Ausgangskomponente mit der Ausgangshohlwelle 270 drehfest verbunden. Das Planetengetriebe 220 umfasst des Weiteren als erste Eingangskomponente ein Hohlrad 224 mit einer Außenverzahnung. Die Außenverzahnung des Hohlrads 224 ist in Eingriff stehend mittels eines Drehzahlreduziergetriebes 260 mit dem Stell-Elektromotor 210 verbunden. Die Planetenräder 222 kämmen beziehungsweise sind in Eingriff stehend mit dem und zwischen dem Sonnenrad 221 und dem Hohlrad 224 des Planetengetriebes 220 angeordnet. Es kann vorgesehen sein, dass das Drehzahlreduziergetriebe 260 einstufig oder mehrstufig ist, beispielsweise, wie in Figur 4 dargestellt, zweistufig. Die zweite Eingangskomponente des Planetengetriebes 220 ist in diesem Ausführungsbeispiel der Planetenträger. Der Planetenträger 223 ist mit einer Vielzahl von Planetenrädern 222, insbesondere mit drei Planetenrädern 222, und mit der Tretachse 106 drehfest verbunden. Des Weiteren weist die Antriebsvorrichtung 200 einen Drehzahlsensor 285 auf. Der Drehzahlsensor 285 erfasst die Drehzahl der Tretachse 106 beispielsweise durch eine photoelektrische Abtastung oder eine magnetische Abtastung. Beispielsweise weist die Antriebsvorrichtung 200 zur Erfassung der Drehzahl eine mit Schlitzen versehene Scheibe 283 auf, welche mit der Tretachse 106 mittels einer optionalen Hochtreiber-Getriebestufe 280 verbunden ist. Die optionale Hochtreiber-Getriebestufe 280 weist das in Figur 4 dargestellte erste größere Zahnrad 281 und ein zweites kleineres Zahnrad 282 auf, wobei die mit Schlitzen versehene Scheibe 283 drehfest mit dem zweiten kleineren Zahnrad 282 verbunden ist, so dass die Scheibe 283 mit einer gegenüber der Tretachse erhöhten und durch ein festes Übersetzungsverhältnis definierten Sensordrehzahl dreht. Mit anderen Worten ist die Sensordrehzahl der Scheibe 283 proportional zur Drehzahl der Tretachse 106. Der Drehzahlsensor 285 ist somit dazu eingerichtet eine Drehzahl zu erfassen, welche die Drehzahl der Tretachse 106 repräsentiert. Der Drehzahlsensor 285 umfasst beispielsweise ferner eine Leuchtdiode und wenigstens zwei leicht versetzt angeordneten Photodetektoren, wobei die Scheibe 281 zwischen der Leuchtdiode und den Photodetektoren angeordnet ist. Der Drehzahlsensor 285 ist dazu eingerichtet die Drehzahl der Tretachse 106 genau zu erfassen, vorteilhafterweise weist der Drehzahlsensor 285 eine Genauigkeit von mindestens 1000 Inkrementen pro Umdrehung auf, bevorzugt mindestens 2000 Inkremente pro Umdrehung und besonders bevorzugt mindestens 4000 Inkremente pro Umdrehung. Der Drehzahlsensor 285 kann zusätzlich einen Reed-Sensor zur Erfassung einer vollständigen Umdrehung der Tretachse 106 umfassen, wobei beispielsweise ein Magnet zur Erfassung des Reedsignals an den Pedalkurbeln 105 und/oder an dem ersten größeren Zahnrad 281 und/oder an der Scheibe 281 angeordnet ist. Trittkräfte des Radfahrers auf die Pedale, welche mit den Pedalkurbeln 105 und der Tretachse 106 drehfest verbunden sind, resultieren in einem Fahrerdrehmoment und einer Drehzahl der Tretachse 106. Die Drehzahl und das Fahrdrehmoment werden mittels des Planetenträgers 223 und der Planeten 222 auf das Sonnenrad 221 des Planetengetriebes 220 sowie schließlich auf das Abtriebsritzel 108 und das Verbindungselement 107 übertragen. Die Übersetzung zwischen dem Planetenträger 223 und dem Sonnenrad 221 kann mittels des Stell-Elektromotors 210 durch die Erzeugung einer Stell-Motordrehzahl in Abhängigkeit der erfassten Drehzahl der Tretachse 106 elektrisch eingestellt werden, wobei das Stell-Verhältnis zwischen der Drehzahl der Tretachse 106 und der Stell-Motordrehzahl vorzugsweise zumindest für einen Zeitraum von einer viertel Umdrehung der Tretachse konstant ist. Mit anderen Worten folgt die Stell- Motordrehzahl kontinuierlich der erfassten Drehzahl der Tretachse 106, wobei eine Anpassung der Stell-Motordrehzahl innerhalb einer Zeitspanne von kleiner oder gleich zwanzig Millisekunden (20 ms) nach einer Drehzahländerung der Tretachse 106 durchgeführt wird. Ein Signal des Drehzahlsensors 285, welches die erfasste Drehzahl repräsentiert, wird dazu von dem Steuergerät 250 erfasst und der Stell-Elektromotors 210 in Abhängigkeit der erfassten Drehzahl der Tretachse 106 angesteuert. Bei einem Übersetzungsverhältnis zwischen dem Hohlrad 224 und dem Stell-Elektromotor 210 von i=48 sollte der Stell-Elektromotor 210 vorteilhafterweise eine Drehzahl bis 3600 rpm bei einem Drehmoment bis 3 Nm bereitstellen können, so dass das Fahrerdrehmoment ausreichend zuverlässig abgestützt wird. Ferner umfasst die Antriebsvorrichtung 200 eine optionale Bremse 225, welche dazu eingerichtet ist, eine optionale Bremsscheibe 226 zu fixieren, wobei die Bremsscheibe 226 drehfest mit dem Hohlrad 224 des Planetengetriebes oder mit einem Rotor des Stell- Elektromotors 210 verbunden ist. Die Bremse 225 kann beispielsweise bei Geschwindigkeiten des Fahrrads kleiner oder gleich einem Schwellenwert aktiviert werden, um einen Direktgang einzustellen, welcher dem Radfahrer ein sehr direktes Fahrgefühl bei einer großen Trittkraft im Stillstand des Fahrrads vermittelt. Alternativ oder zusätzlich kann es vorgesehen sein, dass die Bremse im Falle eines niedrigen Ladezustands des Batteriemoduls aktiviert wird, um einen Direktgang einzustellen. Bei einer aktivierten Bremse 225 wird der Stell-Elektromotors 210 nicht angesteuert.

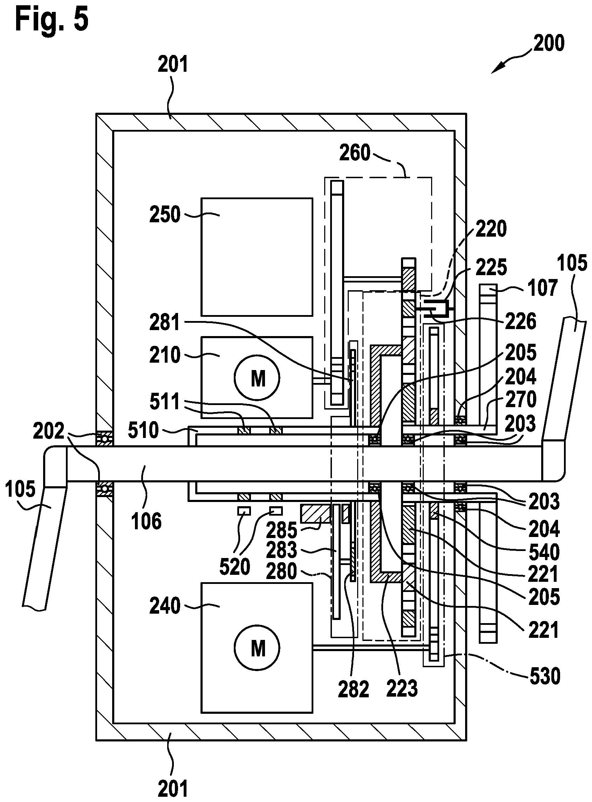

In Figur 5 ist ein zu Figur 4 ähnlicher Aufbau eines Getriebes der Antriebsvorrichtung 200 mit Stell-Elektromotor 210 im Querschnitt schematisch dargestellt. Die Bezugszeichen in Figur 5 kennzeichnen die gleichen Komponenten wie in Figur 4. Die Antriebsvorrichtung 200 aus Figur 5 weist gegenüber der Antriebsvorrichtung 200 aus Figur 4 eine leicht veränderte Anordnung der Komponenten zueinander und zusätzlich eine Eingangshohlwelle 510, einen Drehmomentsensor 520 und einen Antrieb-Elektromotor 240 sowie ein weiteres Drehzahlreduziergetriebe 530 und einen Motorfreilauf 540 auf. In dem Ausführungsbeispiel aus Figur 5 ist die Tretachse 106 drehfest mit der Eingangshohlwelle 510 verbunden. Die Eingangshohlwelle 510 umfasst zwei magnetisierte oder magnetisierbare Bereiche 511. Die Magnetisierung dieser magnetisierten oder magnetisierbaren Bereiche 511 kann mittels des Drehmomentsensors 520 erfasst werden, wobei die erfasste Magnetisierung der magnetisierten oder magnetisierbaren Bereiche 511 das Fahrerdrehmoment repräsentiert. Mit anderen Worten wird an der Eingangshohlwelle 510 das Fahrerdrehmoment durch die Ermittlung eines inversen magnetostriktiver Effekt aufgrund einer Torsion der Eingangshohlwelle 510 erfasst. Die Scheibe 283 ist ferner mit der Eingangshohlwelle 510 mittels der optionalen Hochtreiber-Getriebestufe 280 beziehungsweise dem ersten größeren Zahnrad 281 und dem zweiten kleineren Zahnrad 282 in Eingriff stehend verbunden. Der Drehzahlsensor ist dazu eingerichtet, die Drehzahl der Tretachse mittels der Scheibe 283 zu erfassen, da die Drehzahl der Scheibe 283 beziehungsweise die Sensordrehzahl die Drehzahl der Tretachse 106 repräsentiert. Der Planetenträger 223 des Planetengetriebes 220 ist als zweite Eingangskomponente des Planetengetriebes 220 drehfest mit der Eingangshohlwelle 510 verbunden. Der Stell-Elektromotor 210 ist mittels des Drehzahlreduziergetriebes 260 in Eingriff stehend mit der Außenverzahnung des Hohlrads 224 des Planetengetriebes 220 als erste Eingangskomponente des Planetengetriebes 220 verbunden und treibt dieses an. Es kann vorgesehen sein, dass das Drehzahlreduziergetriebe 260 einstufig oder mehrstufig ist, beispielsweise, wie in Figur 5 dargestellt, zweistufig. Durch die Drehung des Planetenträgers 223 und des Hohlrads 224 werden die Planetenräder 222 und das Sonnenrad 221 des Planetengetriebes 220 als Ausgangskomponente des Planetengetriebes angetrieben. Das Sonnenrad 221 ist auf der Ausgangshohlwelle 270 drehfest angeordnet und mit dem Abtriebsritzel 108 drehfest verbunden. Der Antrieb-Elektromotor 240 ist mittels eines weiteren Drehzahlreduziergetriebes 530 ebenfalls mit dieser Ausgangshohlwelle 270 in Eingriff stehend verbunden. Ein durch den Antrieb-Elektromotor 240 erzeugtes weiteres Motordrehmoment wird folglich an der Ausgangshohlwelle 270 mit dem Fahrerdrehmoment des Radfahrers und dem Motordrehmoment des Stell-Elektromotors 210 summiert und das resultierende Drehmoment der Ausgangshohlwelle 270 an das Abtriebsritzel 108 zum Antrieb des Fahrrads übertragen. Zwischen dem Drehzahlreduziergetriebe 530 und der Ausgangshohlwelle 270 ist vorteilhafterweise ein optionaler Motorfreilauf 540 angeordnet. Alternativ kann das Drehzahlreduziergetriebe 530 zwischen der Eingangshohlwelle 510 und dem Antrieb-Elektromotor 240 angeordnet sein, so dass der Antrieb-Elektromotor 240 mit der Eingangshohlwelle 510 verbunden ist beziehungsweise das erzeugte weitere Motordrehmoment an die Eingangshohlwelle 510 übertragen wird. Das Steuergerät 250 ist dazu eingerichtet, den Stell-Elektromotor 210 in Abhängigkeit der erfassten Drehzahl der Tretachse 106 und/oder den Antrieb-Elektromotor 240 in Abhängigkeit des erfassten Fahrerdrehmoments anzusteuern.

In einer alternativen Ausgestaltung der Antriebsvorrichtung, nicht dargestellt, ist der Antriebs-Elektromotor 240 als Radnabenmotor an der Hinterradnabe 103 des Hinterrads 102 des Fahrrads 100 statt im Bereich der Tretachse 106 beziehungsweise an der Ausgangshohlwelle angeordnet. Gegenüber Figur 5 weist das Gehäuse 201 der Antriebsvorrichtung 200 in dieser Ausgestaltung keinen Motorfreilauf 540, kein weiteres Drehzahlreduziergetriebe 540 und keinen Antrieb-Elektromotor 240 auf, da dieser an der Hinterradnabe 103 als Radnabenmotor angeordnet ist. Folglich benötigt diese alternative Ausgestaltung der Antriebsvorrichtung 200 im Bereich der Tretachse einen gegenüber der Antriebsvorrichtung aus Figur 5 kleineren Bauraum.

Alternativ zu dem in Figur 4 und Figur 5 dargestellten Beispielen kann es vorgesehen sein, das andere Komponenten des Planetengetriebes die erste Eingangskomponente und/oder die zweite Eingangskomponente des Planetengetriebes und/oder die Ausgangskomponente repräsentieren. Beispielsweise können auch der Planetenträger oder das Sonnenrad die erste Eingangskomponente des Planetengetriebes sein. Diesbezüglich ist nur notwendig, dass sich die erste Eingangskomponente, die zweite Eingangskomponente und die Ausgangskomponente des Planetengetriebes jeweils voneinander unterscheiden.

Während eines Generatorbetriebs kann wenigstens eine Komponente des Planetengetriebes, insbesondere mittels einer Bremse 225 und einer Bremsscheibe 226, fixiert werden. Bevorzugt wird entweder der Stell-Elektromotors 210 und/oder der Antrieb-Elektromotors 240 im Generatorbetrieb betrieben. Beispielsweise wird die zweite Eingangskomponente des Planetengetriebes 220 beziehungsweise das Hohlrad 224 des Planetengetriebes 220 oder die Ausgangskomponente des Planetengetriebes 220 beziehungsweise das Sonnenrad 221 des Planetengetriebes 220 an das Gehäuse 201 der Antriebsvorrichtung 200 drehfest fixiert. Somit kann in diesem Beispiel der Antrieb-Elektromotor 240 die Bewegungsenergie des Fahrrads zurückgewinnen (entweder als Radnabenmotor oder bei Anordnung im Bereich der Tretachse, beispielsweise entsprechend Figur 5). Alternativ oder zusätzlich kann im Generatorbetrieb die Tretachse 106 fixiert werden. Somit drehen die Pedale im Generatorbetrieb des Stell-Elektromotors 210 und/oder des Antrieb-Elektromotors 240 nicht mit.

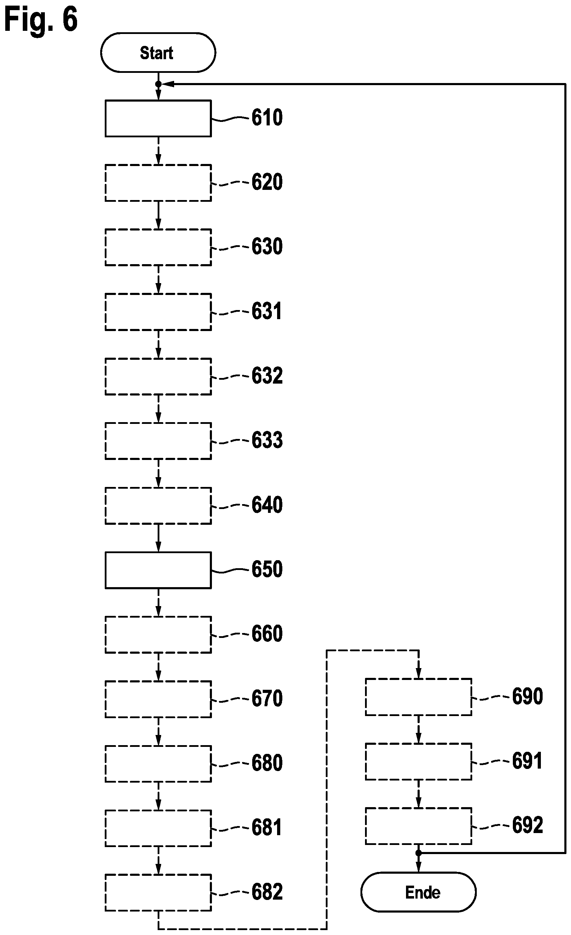

In Figur 6 ist ein Ablaufdiagramm des Verfahrens zur Steuerung einer Antriebsvorrichtung 200 als Blockdiagramm dargestellt. Zunächst wird im Schritt 610 die Drehzahl der Tretachse 106 erfasst. Es kann vorteilhafterweise vorgesehen sein, dass im Schritt 610 eine Größe erfasst wird, welche die Drehzahl repräsentiert. Beispielsweise wird im Schritt 610 die Winkelgeschwindigkeit der Tretachse 106 oder ein Verlauf der Winkellage der Tretachse 106 erfasst. Es kann des Weiteren vorteilhafterweise vorgesehen sein, dass im Schritt 610 eine Drehzahl einer Komponente der Antriebsvorrichtung 200 erfasst wird, welche die Drehzahl der Tretachse 106 repräsentiert. Insbesondere wird im Schritt 610 die Drehzahl einer Scheibe 283 erfasst, welche drehfest mit der Tretachse verbunden oder mittels einer Hochtreiberstrufe 280 in Eingriff stehend mit der Tretachse verbunden ist. Die Drehzahl der Tretachse 106 wird im Schritt 610 möglichst genau erfasst, insbesondere weist beispielsweise die Scheibe 283 bei einer Umdrehung der Tretachse 106 größer oder gleich 1000 Durchgänge von Inkrementen beziehungsweise Schlitzen beziehungsweise zählbaren Einheiten auf. Besonders bevorzugt weist die Scheibe 283 bei einer Umdrehung der Tretachse 106 größer oder gleich 2000 Durchgänge von Inkrementen oder größer oder gleich 4000 Durchgänge von Inkrementen auf.

Optional kann es im Schritt 620 vorgesehen sein, dass eine Eingabe des Radfahrers zu einem gewünschten Übersetzungsverhältnis zwischen der Tretachse und dem Abtriebsritzel erfasst wird. In einem anderen optionalen Schritt 630 wird die Geschwindigkeit des Fahrrads erfasst. Im weiteren optionalen Schritt 631 wird eine Steigung einer Fahrtstrecke erfasst. Darüber hinaus wird im optionalen Schritt 632 die Erfassung eines Fahrerdrehmoments durchgeführt. Bevorzugt wird im weiteren optionalen Schritt 640 mindestens eine aktuelle Pedalkurbelposition erfasst, wobei die Pedalkurbelposition vorteilhafterweise in Abhängigkeit der erfassten Drehzahl ermittelt beziehungsweise erfasst werden kann.

Im Schritt 650 wird eine Stell-Motordrehzahl mittels des Stell-Elektromotors in Abhängigkeit der erfassten Drehzahl der Tretachse zur Einstellung eines Übersetzungsverhältnisses des Planetengetriebes zwischen der Tretachse und dem Abtriebsritzel erzeugt. Die Stell-Motordrehzahl wird im Schritt 650 innerhalb einer Zeitspanne von kleiner oder gleich zwanzig Millisekunden nach einer Änderung der erfassten Drehzahl der Tretachse angepasst. Bei der Erzeugung 650 der Stell-Motordrehzahl liegt ein Stell-Verhältnis zwischen der erfassten Drehzahl der Tretachse und der Stell-Motordrehzahl vor. Dieses Stell-Verhältnis zwischen der erfassten Drehzahl der Tretachse und der erzeugten Stell-Motordrehzahl des Stell-Elektromotors wird vorteilhafterweise im Schritt 650 zumindest während einer viertel Umdrehung der Tretachse konstant gehalten. Bevorzugt wird das Stell-Verhältnis z zumindest während einer halben Umdrehung der Tretachse konstant gehalten. Besonders bevorzugt wird das Stell-Verhältnis zumindest während einer oder mehrerer Umdrehungen der Tretachse konstant gehalten.

In einem optionalen Schritt 660 wird eine Anpassung des Stell-Verhältnisses zwischen der erfassten Drehzahl der Tretachse und der Stell-Motordrehzahl des Stell-Elektromotors durchgeführt. Die Anpassung 660 des Stell-Verhältnisses erfolgt optional in Abhängigkeit der erfassten Eingabe des Radfahrers. Alternativ oder zusätzlich erfolgt die optionale Anpassung 660 des Stell-Verhältnisses, insbesondere teilautomatisch oder automatisch, in Abhängigkeit der erfassten Drehzahl der Tretachse und/oder in Abhängigkeit des erfassten Fahrerdrehmoments und/oder in Abhängigkeit der erfassten Geschwindigkeit des Fahrrads und/oder in Abhängigkeit der erfassten Steigung der Fahrtstrecke des Fahrrads. Das Stell-Verhältnis wird im Schritt 660 vorteilhafterweise angepasst, wenn die erfasste Drehzahl einen unteren Drehzahl-Schwellenwert unterschreitet, und/oder, wenn die erfasste Drehzahl einen oberen Drehzahl-Schwellenwert überschreitet. Alternativ oder zusätzlich wird das Stell-Verhältnis im Schritt 660 vorteilhafterweise angepasst, wenn das erfasste Fahrerdrehmoment einen unteren Fahrerdrehmoment-Schwellenwert unterschreitet, und/oder, wenn das erfasste Fahrerdrehmoment einen oberen Fahrerdrehmoment-Schwellenwert überschreitet. Alternativ oder zusätzlich wird das Stell-Verhältnis im Schritt 660 vorteilhafterweise in Abhängigkeit der erfassten Fahrradgeschwindigkeit und/oder der erfassten Steigung der Fahrtstrecke angepasst. Es kann vorgesehen sein, dass, wenn ein Stillstand des Fahrrads in Abhängigkeit einer erfassten Geschwindigkeit des Fahrrads erkannt wird, das Stell-Verhältnis auf einen vorgegebenen Startsollwert angepasst beziehungsweise eingestellt wird.

Das Stell-Verhältnis kann beispielsweise einen Wert aus einer vorgegebenen Liste mit diskreten Werten betragen beziehungsweise aus der vorgegebenen Liste mit diskreten Werten gewählt werden. Die diskreten Werte repräsentieren jeweils unterschiedliche vorgegebene Übersetzungsverhältnisse, wobei die Übersetzungverhältnisse insbesondere zwischen 1 und 10 liegen, besonders bevorzugt liegen die Übersetzungverhältnisse insbesondere zwischen 0,5 und 20.

In einer optionalen Weiterführung wird das Stell-Verhältnis im Schritt 660 so angepasst, dass kontinuierlich eine Regelung der Drehzahl der Tretachse auf einen Sollumdrehungswert oder einen Sollumdrehungswertbereich erfolgt. Der Sollumdrehungswert liegt beispielsweise bei 80 Umdrehungen pro Minute. Der Sollumdrehungswertbereich liegt beispielsweise zwischen 70 und 100 Umdrehungen pro Minute. Mit anderen Worten wird das Verfahren kontinuierlich durchgeführt, wobei die im Schritt 650 erzeugte Stell-Motordrehzahl durch die Anpassung des Stell-Verhältnisses im Schritt 660 so geregelt wird, dass ein laufend angepasstes Übersetzungsverhältnis des Planetengetriebes zwischen der Tretachse und dem Abtriebsritzel resultiert, wobei das resultierende Übersetzungsverhältnis bei gleichbleibender Trittkraft des Radfahrers eine Anpassung beziehungsweise Annäherung der Kadenz des Radfahrers beziehungsweise der Drehzahl der Tretachse an einen Sollumdrehungswert verursacht.

Besonders bevorzugt erfolgt die optionale Anpassung 660 des Stell-Verhältnisses alternativ oder zusätzlich in Abhängigkeit der erfassten aktuellen Pedalkurbelposition, insbesondere nur im Bereich einer bezüglich der Pedalkurbelrotation beziehungsweise Tretachsenrotation oberen oder unteren Pedalkurbelposition. Dadurch wird das Stell-Verhältnis nur dann angepasst, wenn der Radfahrer dies kaum merkt, da in dem Bereich der oberen oder unteren Pedalkurbelposition die Kraft des Radfahrers auf die Pedale minimal ist beziehungsweise die Kraft auf die Pedale an jedem Bein an der oberen oder unteren Pedalkurbelposition jeweils einen Nulldurchgang aufweist. Ein Bereich einer bezüglich der Pedalkurbelrotation beziehungsweise Tretachsenrotation oberen oder unteren Pedalkurbelposition kann dabei durch die Winkelabweichung von der oberen oder unteren Pedalkurbelposition definiert sein, welche beispielsweise kleiner oder gleich 20 Grad und insbesondere kleiner oder gleich 10 Grad beträgt.

In einem zusätzlichen optionalen Schritt 670 wird ein weiteres Motordrehmoment in Abhängigkeit des erfassten Fahrerdrehmoments an der Tretachse mittels des Antrieb-Elektromotors zur Kraftunterstützung des Radfahrers erzeugt.

Ferner kann es in einem optionalen Schritt 680 vorgesehen sein, eine Eingabe des Radfahrers zu einem Generatorbetrieb zu erfassen. Im weiteren optionalen Schritt 681 wird ein Abstand des Fahrrads zu Objekten in der Umgebung des Fahrrads erfasst. Ferner kann eine Einstellung 682 des Stell-Elektromotors und/oder des Antrieb-Elektromotors in einen Generatorbetriebsmodus in Abhängigkeit der erfassten Eingabe des Radfahrers zum Generatorbetrieb und/oder des erfassten Abstands des Fahrrads zu Objekten in der Umgebung des Fahrrads und/oder der im Schritt 631 erfassten Steigung der Fahrtstrecke und in Abhängigkeit der im Schritt 630 erfassten Geschwindigkeit des Fahrrads erfolgen. In dieser optionalen Ausgestaltung der Erfindung kann folglich eine Bewegungsenergie des Fahrrads zurückgewonnen werden. Während des Schritts 682 wird die Tretachse insbesondere an das Gehäuse der Antriebsvorrichtung fixiert, beispielsweise mittels einer Bremsscheibe, welche drehfest mit der Tretachse verbunden ist, und einer Bremse.

Darüber hinaus wird in einem optionalen Schritt 690 eine Eingabe des Radfahrers zu einem gewünschten manuellen Betrieb ohne elektrische Unterstützung erfasst. Alternativ oder zusätzlich wird im optionalen Schritt 691 ein aktueller Ladezustand einer Batterie des Fahrrads erfasst. Anschließend wird im optionalen Schritt 692 eine Fixierung der ersten Eingangskomponente des Planetengetriebes durchgeführt. Die Fixierung erfolgt insbesondere in Abhängigkeit der erfassten Eingabe des Radfahrers zu einem gewünschten manuellen Betrieb und/oder in Abhängigkeit des erfassten aktuellen Ladezustands der Batterie, insbesondere mittels einer drehfest mit der ersten Eingangskomponente verbundenen Bremsscheibe und einer Bremse.

Das Verfahren wird bevorzugt kontinuierlich durchgeführt. Es kann optional pausiert werden, wenn die erfasste Drehzahl der Tretachse einen Abbruchschwellenwert unterschreitet, wobei das Verfahren insbesondere mit dem vorherigen Stell-Verhältnis fortgeführt wird, sobald wieder eine Drehzahl an der Tretachse erfasst wird.

**Patentansprüche**

1. Verfahren zur Steuerung einer Antriebsvorrichtung (200) eines Fahrrads (100), wobei die Antriebsvorrichtung (200) ein Planetengetriebe (220), einen Stell-Elektromotor (210) und ein Drehzahlreduziergetriebe (260) aufweist, wobei der Stell-Elektromotor (210) mittels des Drehzahlreduziergetriebes (260) mit einer ersten Eingangskomponente (224) des Planetengetriebes (220) im Eingriff stehend verbunden ist und die Tretachse (106) des Fahrrads (100) mit einer zweiten Eingangskomponente (223) des Planetengetriebes (220) drehfest oder im Eingriff stehend verbunden ist und eine von den Eingangskomponenten (223, 224) unterschiedliche Ausgangskomponente (221) des Planetengetriebes (220) mit einem Abtriebsritzel (108) der Antriebsvorrichtung (200), drehfest, verbunden ist, umfassend die folgenden Verfahrensschritte

   • Erfassung (610) einer Drehzahl der Tretachse (106), und
   • Erzeugung (650) einer Stell-Motordrehzahl mittels des Stell-Elektromotors (210) in Abhängigkeit der erfassten Drehzahl der Tretachse (106) zur Einstellung eines Übersetzungsverhältnisses des Planetengetriebes (220) zwischen der Tretachse (106) und dem Abtriebsritzel (108), wobei die Stell-Motordrehzahl innerhalb einer Zeitspanne von kleiner oder gleich zwanzig Millisekunden nach einer Änderung der erfassten Drehzahl der Tretachse (106) angepasst wird und
   • wobei das Planetengetriebe (220) koaxial um die Tretachse (106) angeordnet ist,
   • die Tretachse (106) drehfest mit dem Planetenträger (223) des Planetengetriebes (220) verbunden ist,
   • der Stell-Elektromotor (210) mit dem Hohlrad (224) des Planetengetriebes (220) mittels des Drehzahlreduziergetriebes (260) in Eingriff stehend verbunden ist, wobei das Hohlrad (224) zusätzlich eine Außenverzahnung aufweist, und
   • das Sonnenrad (221) des Planetengetriebes (220) drehfest auf einer koaxial um die Tretachse (106) laufenden Ausgangshohlwelle (270) angeordnet ist und diese Ausgangshohlwelle (270) drehfest mit dem Ausgangsritzel (108) der Antriebsvorrichtung (200) verbunden ist, **gekennzeichnet durch** die folgenden Schritte:
   • Erfassung (690) einer Eingabe des Radfahrers zu einem gewünschten manuellen Betrieb ohne elektrische Unterstützung, und/oder
   • Erfassung (691) eines aktuellen Ladezustands eines Batteriemoduls (300) des Fahrrads (100), und
   • Fixierung (692) des Hohlrads (224) des Planetengetriebes (220), mittels einer drehfest mit dem Hohlrad (224) verbundenen Bremsscheibe (226), in Abhängigkeit der erfassten Eingabe des Radfahrers zu einem gewünschten manuellen Betrieb und/oder in Abhängigkeit des erfassten aktuellen Ladezustands des Batteriemoduls (300), mittels einer Bremse (225).

2. Verfahren nach Anspruch 1, wobei bei der Erzeugung (650) der Stell-Motordrehzahl ein Stell-Verhältnis zwischen der erfassten Drehzahl der Tretachse (106) und der Stell-Motordrehzahl des Stell-Elektromotors (210) zumindest während einer viertel Umdrehung der Tretachse (106) konstant gehalten wird.

3. Verfahren nach einem der Ansprüche 1 oder 2, wobei folgende Schritte durchgeführt werden

   • Erfassung (620) einer Eingabe des Radfahrers zu einem gewünschten Übersetzungsverhältnis zwischen der Tretachse (106) und dem Abtriebsritzel (108), und
   • Anpassung (660) des Stell-Verhältnisses zwischen der erfassten Drehzahl der Tretachse (106) und der Stell-Motordrehzahl des Stell-Elektromotors (210) in Abhängigkeit der erfassten Eingabe des Radfahrers.

4. Verfahren nach einem der vorhergehenden Ansprüche, wobei folgender Schritt durchgeführt wird

   • Anpassung (660) des Stell-Verhältnisses zwischen der erfassten Drehzahl der Tretachse (106) und der Stell-Motordrehzahl des Stell-Elektromotors (210) in Abhängigkeit der erfassten Drehzahl der Tretachse (106), wobei das Stell-Verhältnis insbesondere angepasst wird,
   i. wenn die erfasste Drehzahl einen unteren Drehzahl-Schwellenwert unterschreitet, und/oder
   ii. wenn die erfasste Drehzahl einen oberen Drehzahl-Schwellenwert überschreitet.

5. Verfahren nach einem der vorhergehenden Ansprüche, wobei folgender Schritt durchgeführt wird

   • Erfassung (632) eines Fahrerdrehmoments an der Tretachse (106), und
   • Anpassung (660) des Stell-Verhältnisses zwischen der erfassten Drehzahl der Tretachse (106) und der Stell-Motordrehzahl des Stell-Elektromotors (210) in Abhängigkeit des erfassten Fahrerdrehmoments, wobei das Stell-Verhältnis insbesondere angepasst wird,
   i. wenn das erfasste Fahrerdrehmoment einen unteren Fahrerdrehmoment-Schwellenwert unterschreitet, und/oder
   ii. wenn das erfasste Fahrerdrehmoment einen oberen Fahrerdrehmoment- Schwellenwert überschreitet.

6. Verfahren nach einem der vorhergehenden Ansprüche, wobei folgender Schritt durchgeführt wird

   • Erfassung (630) einer Geschwindigkeit des Fahrrads (100), und/oder
   • Erfassung (631) einer Steigung einer Fahrtstrecke, und
   • Anpassung (660) des Stell-Verhältnisses in Abhängigkeit der erfassten Fahrradgeschwindigkeit und/oder der erfassten Steigung der Fahrtstrecke.

7. Verfahren nach einem der vorhergehenden Ansprüche, wobei, wenn ein Stillstand des Fahrrads (100) in Abhängigkeit einer erfassten Geschwindigkeit des Fahrrads (100) erkannt wird, das Stell-Verhältnis auf einen vorgegebenen Startsollwert eingestellt wird.

8. Verfahren nach einem der vorhergehenden Ansprüche, wobei das Stell-Verhältnis aus einer vorgegebenen Liste mit diskreten Werten gewählt wird, wobei diese diskreten Werte jeweils zueinander unterschiedliche vorgegebene Übersetzungsverhältnisse repräsentieren.

9. Verfahren nach einem der vorhergehenden Ansprüche, wobei das Stell-Verhältnis so angepasst wird, dass kontinuierlich eine Regelung der Drehzahl der Tretachse (106) auf einen Sollumdrehungswert oder einen Sollumdrehungswertbereich erfolgt.

10. Verfahren nach einem der vorhergehenden Ansprüche, wobei folgende Schritte durchgeführt werden

   • Erfassung (640) mindestens einer aktuellen Pedalkurbelposition, und
   • Anpassung (660) des Stell-Verhältnisses zusätzlich in Abhängigkeit der erfassten aktuellen Pedalkurbelposition.

11. Verfahren nach einem der vorhergehenden Ansprüche, wobei zusätzlich folgende Schritte durchgeführt werden

- Erfassung (632) eines Fahrerdrehmoments an der Tretachse (106), und
- Erzeugung (670) eines weiteren Motordrehmoments in Abhängigkeit des erfassten Fahrerdrehmoments an der Tretachse (106) mittels eines Antrieb-Elektromotors (240) zur Kraftunterstützung des Radfahrers, wobei der Antrieb-Elektromotor (240), insbesondere mittels eines weiteren Drehzahlreduziergetriebes (530) in Eingriff stehend,
  i. mit der Ausgangskomponente (221) des Planetengetriebes (220) verbunden ist, oder
  ii. mit der zweiten Eingangskomponente (223) des Planetengetriebes (220) verbunden ist, oder
  iii. an einer Vorder- oder Hinterradnabe des Fahrrads (100) angeordnet ist.

12. Verfahren nach einem der vorhergehenden Ansprüche, wobei zusätzlich folgende Schritte durchgeführt werden

    - Erfassung (680) einer Eingabe des Radfahrers zum Generatorbetrieb, und/oder
    - Erfassung (681) eines Abstands des Fahrrads (100) zu Objekten in der Umgebung des Fahrrads (100), und/oder
    - Erfassung (631) einer Steigung der Fahrtstrecke, und
    - Erfassung (630) einer Geschwindigkeit des Fahrrads (100), und
    - Einstellung (682) des Stell-Elektromotors (210) und/oder des Antrieb-Elektromotors in einen Generatorbetriebsmodus in Abhängigkeit der erfassten Eingabe des Radfahrers zum Generatorbetrieb und/oder des erfassten Abstands des Fahrrads (100) zu Objekten in der Umgebung des Fahrrads (100) und/oder der erfassten Steigung der Fahrtstrecke und in Abhängigkeit der erfassten Geschwindigkeit des Fahrrads (100), wobei die Tretachse (106) insbesondere an ein Gehäuse (201) der Antriebsvorrichtung (200) fixiert wird.

13. Antriebsvorrichtung (200) für ein Fahrrad (100), wobei die Antriebsvorrichtung (200) ein Planetengetriebe (220), einen Stell-Elektromotor (210) und ein Drehzahlreduziergetriebe (260) aufweist, wobei der Stell-Elektromotor (210) mittels des Drehzahlreduziergetriebes (260) mit einer ersten Eingangskomponente (224) des Planetengetriebes (220) und eine Tretachse (106) mit einer zweiten Eingangskomponente (223) des Planetengetriebes (220) drehfest oder im Eingriff stehend verbunden sind und eine von den Eingangskomponenten (223, 224) unterschiedliche Ausgangskomponente (221) des Planetengetriebes (220) mit einem Abtriebsritzel (108) der Antriebsvorrichtung (200), drehfest, verbunden ist, wobei ein Steuergerät (250) der Antriebsvorrichtung (200) dazu eingerichtet ist, ein Verfahren nach einem der Ansprüche 1 bis 12 durchzuführen, so dass das Steuergerät (250) dazu eingerichtet ist,

    - eine Drehzahl der Tretachse (106) mittels eines Drehzahlsensors zu erfassen, und
    - den Stell-Elektromotor (210) in Abhängigkeit der erfassten Drehzahl der Tretachse (106) zur Erzeugung einer Stell-Motordrehzahl zur Einstellung eines Übersetzungsverhältnisses zwischen der Tretachse (106) und dem Abtriebsritzel (108) anzusteuern, wobei die Stell-Motordrehzahl innerhalb einer Zeitspanne von zwanzig Millisekunden nach einer Änderung der erfassten Drehzahl angepasst wird, wobei
    - das Planetengetriebe (220) koaxial um die Tretachse (106) angeordnet ist,
    - die Tretachse (106) drehfest mit dem Planetenträger (223) des Planetengetriebes (220) verbunden ist,
    - der Stell-Elektromotor (210) mit dem Hohlrad (224) des Planetengetriebes (220) mittels des Drehzahlreduziergetriebes (260) in Eingriff stehend verbunden ist, wobei das Hohlrad (224) zusätzlich eine Außenverzahnung aufweist, und
    - das Sonnenrad (221) des Planetengetriebes (220) drehfest auf einer koaxial um die Tretachse (106) laufenden Ausgangshohlwelle (270) angeordnet ist und diese Ausgangshohlwelle (270) drehfest mit dem Ausgangsritzel (108) der Antriebsvorrichtung (200) verbunden ist.

14. Antriebsvorrichtung (200) nach Anspruch 13, wobei das Steuergerät (250) dazu eingerichtet ist, ein Stell-Verhältnis zwischen der erfassten Drehzahl der Tretachse (106) und der Stell-Motordrehzahl zumindest während einer viertel Umdrehung der Tretachse (106) konstant zu halten.

15. Antriebsvorrichtung (200) nach einem der Ansprüche 13 oder 14, wobei der Drehzahlsensor (285) einen mechanischen, optischen, induktiven und/oder elektrischen Inkrementalgeber oder ein kontinuierlich arbeitendes Messsystem umfasst, wobei der Drehzahlsensor (285) dazu eingerichtet ist, eine Drehzahländerung innerhalb von 20 Millisekunden zu erkennen.

16. Antriebsvorrichtung (200) nach Anspruch 15, wobei der Drehzahlsensor (285) mittels einer Hochtreiber-Getriebestufe (280) mit der Tretachse (106) verbunden ist.

17. Antriebsvorrichtung (200) nach einem der Ansprüche 13 bis 16, wobei das Steuergerät (250) dazu eingerichtet ist,

• eine Eingabe des Radfahrers zu einem gewünschten Übersetzungsverhältnis zwischen der Tretachse (106) und dem Abtriebsritzel (108) mittels eines Gangwahlmittels (230) zu erfassen, wobei das Gangwahlmittel (230) insbesondere am Lenker (110) des Fahrrads (100) angeordnet ist, und
• das Stell-Verhältnis zwischen der erfassten Drehzahl der Tretachse (106) und der Stell-Motordrehzahl in Abhängigkeit der erfassten Eingabe des Radfahrers anzupassen.

18. Antriebsvorrichtung (200) nach einem der Ansprüche 13 bis 17, wobei das Steuergerät (250) dazu eingerichtet ist,

• das Stell-Verhältnis zwischen der erfassten Drehzahl der Tretachse (106) und der Stell-Motordrehzahl in Abhängigkeit der erfassten Drehzahl und/oder eines mittels eines Drehmomentsensors (520) erfassten Fahrerdrehmoments an der Tretachse (106) anzupassen, wobei das Stell-Verhältnis insbesondere angepasst wird,
i. wenn die erfasste Drehzahl einen unteren Drehzahl-Schwellenwert unterschreitet, und/oder
ii. wenn das erfasste Fahrerdrehmoment einen unteren Fahrerdrehmoment-Schwellenwert unterschreitet, und/oder
iii. wenn die erfasste Drehzahl einen oberen Drehzahl-Schwellenwert überschreitet, und/oder
iv. wenn das erfasste Fahrerdrehmoment einen oberen Fahrerdrehmoment- Schwellenwert überschreitet.

19. Antriebsvorrichtung (200) nach einem der Ansprüche 13 bis 18, wobei das Steuergerät (250) dazu eingerichtet ist,

• eine Geschwindigkeit des Fahrrads (100) zu erfassen, insbesondere mittels eines Geschwindigkeitssensors, beispielsweise eines Reed-Sensors am Vorder- oder Hinterrad und/oder mittels eines Positionssensors für ein globales Navigationssatellitensystem,
und/oder
• eine Steigung einer Fahrtstrecke zu erfassen, insbesondere mittels einer inertialen Messeinheit, und
• das Stell-Verhältnis zwischen der erfassten Drehzahl der Tretachse und der Stell-Motordrehzahl in Abhängigkeit der erfassten Fahrradgeschwindigkeit und/oder der erfassten Steigung der Fahrtstrecke anzupassen.

20. Antriebsvorrichtung (200) nach einem der Ansprüche 13 bis 19, wobei das Steuergerät (250) dazu eingerichtet ist,

• mindesten eine aktuelle Pedalkurbelposition zu erfassen, insbesondere mittels eines Pedalkurbelpositionssensors, eines mechanischen, optischen, induktiven und/oder elektrischen Inkrementalgebers oder eines kontinuierlich arbeitenden Messsystems zur Erfassung einer Winkeländerung der Tretachse, und
• das Stell-Verhältnisses in Abhängigkeit der erfassten aktuellen Pedalkurbelposition anzupassen.

21. Antriebsvorrichtung (200) nach einem der Ansprüche 13 bis 20, wobei

• die Antriebsvorrichtung (200) einen weiteren Antrieb-Elektromotor (240) aufweist, wobei der Antrieb-Elektromotor (240)

i. mit der Ausgangskomponente (221) des Planetengetriebes verbunden ist, oder
ii. mit der zweiten Eingangskomponente (223) des Planetengetriebes verbunden ist, oder
iii. an einer Vorder- oder Hinterradnabe des Fahrrads (100) angeordnet ist, wobei

• die Antriebsvorrichtung (200), insbesondere das Steuergerät (250), dazu eingerichtet ist, mittels eines Drehmomentsensors (520) ein Fahrerdrehmoment an der Tretachse zu erfassen, und
• der Antrieb-Elektromotor (240), insbesondere mittels des Steuergeräts (250), dazu eingerichtet ist, in Abhängigkeit des erfassten Fahrerdrehmoments angesteuert zu werden.

22. Antriebsvorrichtung (200) nach Anspruch 21, wobei die Rotor-Positionssensoren des Antrieb-Elektromotors (240) als Drehzahlsensor (280) zur Erfassung der Drehzahl der Tretachse (106) verwendet werden.

23. Antriebsvorrichtung (200) nach einem der Ansprüche 21 oder 22, wobei

• die Antriebsvorrichtung (200) dazu eingerichtet ist, mittels eines Geschwindigkeitssensors eine Geschwindigkeit des Fahrrads zu erfassen, und
• der Antrieb-Elektromotor (240) dazu eingerichtet ist, zusätzlich in Abhängigkeit der erfassten Fahrradgeschwindigkeit angesteuert zu werden.

**24.** Antriebsvorrichtung (200) nach einem der Ansprüche 14 bis 23, wobei das Steuergerät (250) dazu eingerichtet ist,

- eine Eingabe des Radfahrers zum Generatorbetrieb zu erfassen, und/oder
- eine Steigung der Fahrtstrecke zu erfassen, insbesondere mittels einer inertialen Messeinheit, und
- eine Geschwindigkeit des Fahrrads mittels eines Geschwindigkeitssensors zu erfassen, und
- den Stell-Elektromotor (210) und/oder den Antrieb-Elektromotor (240) in Abhängigkeit der erfassten Eingabe des Radfahrers zum Generatorbetrieb und/oder der erfassten Steigung der Fahrtstrecke und in Abhängigkeit der erfassten Geschwindigkeit des Fahrrads (100) in einen Generatorbetriebsmodus zu schalten, wobei die Tretachse (106) insbesondere zusätzlich fixiert wird.

**25.** Antriebsvorrichtung (200) nach einem der Ansprüche 14 bis 24, wobei das Steuergerät (250) dazu eingerichtet ist,

- eine Eingabe des Radfahrers zu einem gewünschten manuellen Betrieb ohne elektrische Unterstützung zu erfassen, und/oder
- einen aktuellen Ladezustand eines Batteriemoduls (300) des Fahrrads (100) zu erfassen, und
- die erste Eingangskomponente (224) des Planetengetriebes (220), insbesondere mittels einer drehfest mit der ersten Eingangskomponente (224) verbundenen Bremsscheibe (226), in Abhängigkeit der erfassten Eingabe des Radfahrers zu einem gewünschten manuellen Betrieb und/oder in Abhängigkeit des erfassten aktuellen Ladezustands des Batteriemoduls (300) zu fixieren, insbesondere mittels einer Bremse (225).

**26.** Fahrrad (100) mit einer Antriebsvorrichtung (200) nach einem der Ansprüche 13 bis 25

**Claims**

**1.** Method for controlling a drive device (200) of a bicycle (100), wherein the drive device (200) comprises a planetary gear (220), an actuating electric motor (210) and a speed reduction gear (260), wherein the actuating electric motor (210) is engagingly connected to a first input component (224) of the planetary gear (220) by means of the speed reduction gear (260) and the pedal axle (106) of the bicycle (100) is connected for conjoint rotation or engagingly to a second input component (223) of the planetary gear (220), and an output component (221) of the planetary gear (220) different from the input components (223, 224) is connected, for conjoint rotation, to an output pinion (108) of the drive device (200), said method comprising the following method steps

- detection (610) of a speed of the pedal axle (106), and
- generation (650) of an actuating motor speed by means of the actuating electric motor (210) based on the detected speed of the pedal axle (106) in order to set a transmission ratio of the planetary gear (220) between the pedal axle (106) and the output pinion (108), wherein the actuating motor speed is adjusted within a time period of less than or equal to twenty milliseconds after a change in the detected speed of the pedal axle (106) and
- wherein the planetary gear (220) is arranged coaxially around the pedal axle (106),
- the pedal axle (106) is connected for conjoint rotation to the planetary carrier (223) of the planetary gear (220),
- the actuating electric motor (210) is connected engagingly to the hollow shaft (224) of the planetary gear (220) by means of the speed reduction gear (260), wherein the hollow shaft (224) additionally has an external toothing, and
- the sun gear (221) of the planetary gear (220) is arranged for conjoint rotation on a hollow output shaft (270) running coaxially around the pedal axle (106) and said hollow output shaft (270) is connected for conjoint rotation to the output pinion (108) of the drive device (200), said method being **characterized by** the following steps:
- detection (690) of an input from the cyclist for desired manual operation without electrical assistance, and/or
- detection (691) of a current state of charge of a battery module (300) of the bicycle (100), and
- fixing (692) of the hollow shaft (224) of the planetary gear (220) by means of a brake disc (226), which is connected for conjoint rotation to the hollow shaft (224), based on the detected input from the cyclist for desired manual operation and/or based on the detected current state of charge of the battery module (300), by means of a brake (225).

**2.** Method according to Claim 1, wherein, in the generation (650) of the actuating motor speed, an actuating ratio between the detected speed of the pedal axle (106) and the actuating motor speed of the actuating electric motor (210) is kept constant at least over a quarter rotation of the pedal axle (106).

**3.** Method according to either of Claims 1 and 2, wherein the following steps are carried out

• detection (620) of an input from the cyclist for a desired transmission ratio between the pedal axle (106) and the output pinion (108), and
• adjustment (660) of the actuating ratio between the detected speed of the pedal axle (106) and the actuating motor speed of the actuating electric motor (210) based on the detected input from the cyclist.

4. Method according to any of the preceding claims, wherein the following step is carried out

• adjustment (660) of the actuating ratio between the detected speed of the pedal axle (106) and the actuating motor speed of the actuating electric motor (210) based on the detected speed of the pedal axle (106), wherein the actuating ratio is adjusted in particular

i. when the detected speed falls below a lower speed threshold value, and/or
ii. when the detected speed exceeds an upper speed threshold value.

5. Method according to any of the preceding claims, wherein the following step is carried out

• detection (632) of a torque applied by the cyclist to the pedal axle (106), and
• adjustment (660) of the actuating ratio between the detected speed of the pedal axle (106) and the actuating motor speed of the actuating electric motor (210) based on the detected torque applied by the cyclist, wherein the actuating ratio is adjusted in particular

i. when the detected torque applied by the cyclist falls below a lower cyclist torque threshold value, and/or
ii. when the detected torque applied by the cyclist exceeds an upper cyclist torque threshold value.

6. Method according to any of the preceding claims, wherein the following step is carried out

• detection (630) of a velocity of the bicycle (100), and/or
• detection (631) of a slope of a route, and
• adjustment (660) of the actuating ratio based on the detected bicycle velocity and/or the detected gradient of the route.

7. Method according to any one of the preceding claims, wherein, when a standstill of the bicycle (100) is detected based on a detected velocity of the bicycle (100), the actuating ratio is set to a predetermined starting setpoint value.

8. Method according to any one of the preceding claims, wherein the actuating ratio is selected from a predetermined list containing discrete values, wherein said discrete values each represent different predetermined transmission ratios to one another.

9. Method according to any one of the preceding claims, wherein the actuating ratio is adapted in such a way that the speed of the pedal axle (106) is continuously controlled to a setpoint revolution value or a setpoint revolution value range.

10. Method according to any of the preceding claims, wherein the following steps are carried out

• detection (640) of at least one current pedal crank position, and
• adjustment (660) of the actuating ratio additionally based on the detected current pedal crank position.

11. Method according to any of the preceding claims, wherein the following steps are additionally carried out

• detection (632) of a torque applied by the cyclist to the pedal axle (106), and
• generation (670) of a further motor torque based on the detected torque applied by the cyclist to the pedal axle (106) by means of a drive electric motor (240) for force assistance for the cyclist, wherein, in particular by means of a further speed reduction gear (530), the drive electric motor (240)

i. is engagingly connected to the output component (221) of the planetary gear (220), or
ii. is engagingly connected to the second input component (223) of the planetary gear (220), or
iii. is arranged on a front or rear wheel hub of the bicycle (100).

12. Method according to any of the preceding claims, wherein the following steps are additionally carried out

- detection (680) of an input from the cyclist for generator operation, and/or
- detection (681) of a distance between the bicycle (100) and objects in the surroundings of the bicycle (100), and/or
- detection (631) of a gradient of the route, and
- detection (630) of a velocity of the bicycle (100), and
- setting (682) of the actuating electric motor (210) and/or the drive electric motor in a generator operating mode based on the detected input of the cyclist for the generator operation and/or the detected distance between the bicycle (100) and objects in the surroundings of the bicycle (100) and/or the detected gradient of the route and based on the detected velocity of the bicycle (100), wherein the pedal axle (106) is fixed in particular to a housing (201) of the drive device (200).

13. Drive device (200) for a bicycle (100), wherein the drive device (200) comprises a planetary gear (220), an actuating electric motor (210) and a speed reduction gear (260), wherein the actuating electric motor (210) is connected for conjoint rotation or engagingly by means of the speed reduction gear (260) to a first input component (224) of the planetary gear (220) and a pedal axle (106) is connected for conjoint rotation or engagingly to a second input component (223) of the planetary gear (220) by means of the speed reduction gear, and an output component (221) of the planetary gear (220) different from the input components (223, 224) is connected, for conjoint rotation, to an output opinion (108) of the drive device (200), wherein a controller (250) of the drive device (200) is configured to carry out a method according to one of Claims 1 to 12 such that the controller (250) is configured

- to detect a speed of the pedal axle (106) by means of a speed sensor, and
- to actuate the actuating electric motor (210) based on the detected speed of the pedal axle (106) to generate an actuating motor speed for setting a transmission ratio between the pedal axle (106) and the output opinion (108), wherein the actuating motor speed is adjusted within a time period of twenty milliseconds after a change in the detected speed of the pedal axle, wherein
- the planetary gear (220) is arranged coaxially around the pedal axle (106),
- the pedal axle (106) is connected for conjoint rotation to the planetary carrier (223) of the planetary gear (220),
- the actuating electric motor (210) is connected engagingly to the hollow shaft (224) of the planetary gear (220) by means of the speed reduction gear (260), wherein the hollow shaft (224) additionally has an external toothing, and
- the sun gear (221) of the planetary gear (220) is arranged for conjoint rotation on a hollow output shaft (270) running coaxially around the pedal axle (106) and said hollow output shaft (270) is connected for conjoint rotation to the output pinion (108) of the drive device (200).

14. Drive device (200) according to Claim 13, wherein the controller (250) is configured to maintain a constant actuating ratio between the detected speed of the pedal axle (106) and the actuating motor speed at least over a quarter rotation of the pedal axis (106).

15. Drive device (200) according to either of Claims 13 and 14, wherein the speed sensor (285) comprises a mechanical, optical, inductive and/or electric incremental encoder or a continuously operating measuring system, wherein the speed sensor (285) is configured to identify a change in speed within 20 milliseconds.

16. Drive device (200) according to Claim 15, wherein the speed sensor (285) is connected to the pedal axle (106) by means of a high-driver gear stage (280).

17. Drive device (200) according to any one of Claims 13 to 16, wherein the controller (250) is configured

- to detect an input from the cyclist for a desired transmission ratio between the pedal axle (106) and the output pinion (108) by means of a gear selector (230), wherein the gear selector (230) is arranged in particular on the handlebar (110) of the bicycle (100), and
- to adjust the actuating ratio between the detected speed of the pedal axle (106) and the actuating motor speed based on the detected input from the cyclist.

18. Drive device (200) according to any one of Claims 13 to 17, wherein the controller (250) is configured

- to adjust the actuating ratio between the detected speed of the pedal axis (106) and the actuating motor speed based on the detected speed and/or a detected torque applied by the cyclist to the pedal axis (106), which torque is measured by means of a torque sensor (520), wherein the actuating ratio is adjusted in particular

  i. when the detected speed falls below a lower speed threshold value, and/or
  ii. when the detected torque applied by the cyclist falls below a lower cyclist torque threshold value, and/or
  iii. when the detected speed exceeds an upper speed threshold value, and/or
  iv. when the detected torque applied by the cyclist exceeds an upper cyclist torque threshold value.

19. Drive device (200) according to any one of Claims 13 to 18, wherein the controller (250) is configured

  • to detect a velocity of the bicycle (100), in particular by means of a velocity sensor, for example a reed sensor on the front or rear wheel and/or by means of a position sensor for a global navigation satellite system, and/or
  • to detect a gradient of a route, in particular by means of an inertial measuring unit, and
  • to adjust the actuating ratio between the detected speed of the pedal axle and the actuating motor speed based on the detected bicycle velocity and/or the detected slop of the route.

20. Drive device (200) according to any one of Claims 13 to 19, wherein the controller (250) is configured

  • to detect at least one current pedal crank position, in particular by means of a pedal crank position sensor, a mechanical, optical, inductive and/or electric incremental encoder or a continuously operating measuring system for detecting a change in angle of the pedal axis, and
  • to adjust the actuating ratio based on the detected current pedal crank position.

21. Drive device (200) according to any one of Claims 13 to 20, wherein

  • the drive device (200) has a further drive electric motor (240), wherein the drive electric motor (240)

    i. is connected to the output component (221) of the planetary gear, or
    ii. is connected to the second input component (223) of the planetary gear, or
    iii. is arranged on a front or rear wheel hub of the bicycle (100), wherein

  • the drive device (200), in particular the controller (250), is configured to detect a torque applied by the cyclist to the pedal axle by means of a torque sensor (520), and
  • the drive electric motor (240), in particular by means of the controller (250), is configured to be actuated based on the torque applied by the cyclist.

22. Drive device (200) according to Claim 21, wherein the rotor position sensors of the drive electric motor (240) are used as speed sensor (280) for detecting the speed of the pedal axis (106).

23. Drive device (200) according to either of Claims 21 and 22, wherein

  • the drive device (200) is configured to detect a velocity of the bicycle by means of a velocity sensor, and
  • the drive electric motor (240) is configured to be additionally actuated based on the detected bicycle velocity.

24. Drive device (200) according to any one of Claims 14 to 23, wherein the controller (250) is configured

  • to detect an input from the cyclist for generator operation, and/or
  • to detect a gradient of the route, in particular by means of an inertial measuring unit, and
  • to detect a velocity of the bicycle by means of a velocity sensor, and
  • to switch the actuating electric motor (210) and/or the drive electric motor (240) to a generator operating mode based on the detected input from the cyclist for generator operation and/or the detected gradient of the route and based on the detected velocity of the bicycle (100), wherein the pedal axis (106) in particular is additionally fixed.

25. Drive device (200) according to any one of Claims 14 to 24, wherein the controller (250) is configured

  • to detect an input from the cyclist for desired manual operation without electrical assistance, and/or
  • to detect a current state of charge of a battery module (300) of the bicycle (100), and
  • to fix the first input component (224) of the planetary gear (220), in particular by means of a brake disc (226), which is connected for conjoint rotation to the input component (224), based on the detected input from the cyclist for desired manual operation and/or based on the detected current state of charge of the battery module (300), in particular by means of a brake (225).

26. Bicycle (100) having a drive device (200) according to any one of Claims 13 to 25.

**Revendications**

1. Procédé de commande d'un dispositif d'entraînement (200) d'un vélo (100), le dispositif d'entraînement (200) comprenant un engrenage planétaire (220), un moteur électrique de commande (210) et un réducteur de vitesse (260), le moteur électrique de commande (210) étant relié à un premier composant d'entrée (224) de l'engrenage planétaire (220) par l'intermédiaire du réducteur de vitesse (260) et l'axe de pédalier (106) du vélo (100) étant relié de manière solidaire en rotation à un deuxième composant d'entrée (223) de l'engrenage planétaire (220) ou est en prise avec celui-ci, et un composant de sortie (221) de l'engrenage planétaire (220), différent des composants d'entrée (223, 224), est relié de manière solidaire en rotation à un pignon de sortie (108) du dispositif d'entraînement (200), comprenant les étapes de procédé suivantes

   • détection (610) d'une vitesse de rotation de l'axe de pédalier (106), et
   • génération (650) d'une vitesse de rotation du moteur de commande au moyen du moteur électrique de commande (210) en fonction de la vitesse de rotation détectée de l'axe de pédalier (106) pour régler un rapport de transmission de l'engrenage planétaire (220) entre l'axe de pédalier (106) et le pignon de sortie (108), la vitesse de rotation du moteur de commande étant ajustée dans un intervalle de temps inférieur ou égal à vingt millisecondes après une modification de la vitesse de rotation détectée de l'axe de pédalier (106), et
   • l'engrenage planétaire (220) est agencé coaxialement à l'axe de pédalier (106), autour de cet axe,
   • l'axe de pédalier (106) est solidaire en rotation du porte-satellites (223) de l'engrenage planétaire (220),
   • le moteur électrique de commande (210) est relié à la couronne (224) de l'engrenage planétaire (220), en étant en prise avec celle-ci, par l'intermédiaire du réducteur de vitesse (260), la couronne (224) présentant en outre une denture extérieure, et
   • la roue solaire (221) de l'engrenage planétaire (220) est agencée de manière fixe en rotation sur un arbre creux de sortie (270) s'étendant coaxialement autour de l'axe de pédalier (106), et cet arbre creux de sortie (270) est relié de manière fixe en rotation au pignon de sortie (108) du dispositif d'entraînement (200), **caractérisé par** les étapes suivantes :
   • détection (690) d'une entrée opérée par le cycliste pour un fonctionnement manuel souhaité sans assistance électrique, et/ou
   • détection (691) d'un état de charge actuel d'un module de batterie (300) du vélo (100), et
   • fixation (692) de la couronne (224) de l'engrenage planétaire (220), au moyen d'un disque de frein (226) relié de manière solidaire en rotation à la couronne (224), en fonction de l'entrée détectée opérée par le cycliste pour un fonctionnement manuel souhaité et/ou en fonction de l'état de charge actuel détecté du module de batterie (300), au moyen d'un frein (225).

2. Procédé selon la revendication 1, dans lequel, lors de la génération (650) de la vitesse de rotation du moteur de commande, un rapport de réglage entre la vitesse de rotation détectée de l'axe de pédalier (106) et la vitesse de rotation du moteur électrique de commande (210) est maintenu constant au moins pendant un quart de tour de l'axe de pédalier (106).

3. Procédé selon l'une des revendications 1 ou 2, dans lequel les étapes suivantes sont mises en œuvre

   • enregistrement (620) d'une entrée opérée par le cycliste pour un rapport de transmission souhaité entre l'axe de pédalier (106) et le pignon de sortie (108), et
   • adaptation (660) du rapport de réglage entre la vitesse de rotation détectée de l'axe de pédalier (106) et la vitesse de rotation du moteur électrique de commande (210) en fonction de l'entrée détectée opérée par le cycliste.

4. Procédé selon l'une des revendications précédentes, dans lequel l'étape suivante est mise en œuvre

   • adaptation (660) du rapport de réglage entre la vitesse de rotation détectée de l'axe de pédalier (106) et la vitesse de rotation du moteur électrique de commande (210) en fonction de la vitesse de rotation détectée de l'axe de pédalier (106), le rapport de réglage étant notamment adapté

    i. si la vitesse de rotation détectée tombe en dessous d'une valeur seuil inférieure de vitesse de rotation, et/ou
    ii. si la vitesse de rotation détectée dépasse une valeur seuil de vitesse de rotation supérieure.

**5.** Procédé selon l'une des revendications précédentes, dans lequel l'étape suivante est mise en œuvre

    • détection (632) d'un couple exercé par le cycliste sur l'axe de pédalier (106), et
    • ajustement (660) du rapport de réglage entre la vitesse de rotation détectée de l'axe de pédalier (106) et la vitesse de rotation du moteur électrique de commande (210) en fonction du couple détecté exercé par le cycliste, le rapport de réglage étant notamment adapté

    i. si le couple détecté exercé par le cycliste tombe en dessous d'une valeur seuil inférieure de couple exercé par le cycliste, et/ou
    ii. si le couple détecté exercé par le cycliste dépasse une valeur seuil supérieure de couple exercé par le cycliste.

**6.** Procédé selon l'une des revendications précédentes, dans lequel l'étape suivante est mise en œuvre

    • détection (630) d'une vitesse du vélo (100), et/ou
    • détection (631) d'une pente d'un parcours, et
    • adaptation (660) du rapport de réglage en fonction de la vitesse du vélo détectée et/ou de la pente détectée du parcours.

**7.** Procédé selon l'une des revendications précédentes, dans lequel, lorsqu'un arrêt du vélo (100) est détecté en fonction d'une vitesse détectée du vélo (100), le rapport de réglage est réglé sur une valeur de consigne de démarrage prédéfinie.

**8.** Procédé selon l'une des revendications précédentes, dans lequel le rapport de réglage est choisi dans une liste prédéfinie de valeurs distinctes, ces valeurs distinctes représentant chacune des rapports de transmission prédéfinis différents les uns des autres.

**9.** Procédé selon l'une des revendications précédentes, dans lequel le rapport de réglage est ajusté de telle sorte que la vitesse de rotation de l'axe de pédalier (106) soit régulée en continu à une valeur de rotation de consigne ou à une plage de valeurs de rotation de consigne.

**10.** Procédé selon l'une des revendications précédentes, dans lequel les étapes suivantes sont mises en œuvre

    • détection (640) d'au moins une position actuelle de la manivelle de pédale, et
    • adaptation (660) du rapport de réglage en fonction de la position actuelle de la manivelle de pédale.

**11.** Procédé selon l'une des revendications précédentes, dans lequel les étapes suivantes sont en outre mises en œuvre

    • détection (632) d'un couple exercé par le cycliste sur l'axe de pédalier (106), et
    • génération (670) d'un couple moteur supplémentaire en fonction du couple détecté exercé par le cycliste au niveau de l'axe de pédalier (106) au moyen d'un moteur électrique d'entraînement (240) pour assister le cycliste, le moteur électrique d'entraînement (240), en particulier en prise avec un autre réducteur de vitesse (530),

    i. étant relié au composant de sortie (221) de l'engrenage planétaire (220), ou
    ii. étant relié au deuxième composant d'entrée (223) de l'engrenage planétaire (220), ou
    iii. est agencé sur un moyeu de roue avant ou arrière du vélo (100).

**12.** Procédé selon l'une des revendications précédentes, dans lequel les étapes suivantes sont en outre mises en œuvre

    • détection (680) d'une entrée opérée par le cycliste pour le fonctionnement du générateur, et/ou
    • détection (681) d'une distance entre le vélo (100) et des objets situés dans l'environnement du vélo (100), et/ou
    • détection (631) d'une pente du parcours, et
    • détection (630) de la vitesse du vélo (100), et

• réglage (682) du moteur électrique de commande (210) et/ou du moteur électrique d'entraînement dans un mode de fonctionnement générateur en fonction de l'entrée détectée opérée par le cycliste pour le fonctionnement générateur et/ou de la distance détectée entre le vélo (100) et des objets situés dans l'environnement du vélo (100) et/ou de la pente détectée du parcours et en fonction de la vitesse détectée du vélo (100), l'axe de pédalier (106) étant notamment fixé à un boîtier (201) du dispositif d'entraînement (200).

13. Dispositif d'entraînement (200) pour un vélo (100), le dispositif d'entraînement (200) comprenant un engrenage planétaire (220), un moteur électrique de commande (210) et un réducteur de vitesse (260), le moteur électrique de commande (210) étant relié de manière solidaire en rotation à un premier composant d'entrée (224) de l'engrenage planétaire (220), ou en prise avec celui-ci, au moyen du réducteur de vitesse (260), et un axe de pédalier (106) étant relié de manière solidaire en rotation à un deuxième composant d'entrée (223) de l'engrenage planétaire (220), ou en prise avec celui-ci, et un composant de sortie (221) de l'engrenage planétaire (220), différent des composants d'entrée (223, 224) est relié de manière solidaire en rotation à un pignon de sortie (108) du dispositif d'entraînement (200), en étant solidaire en rotation, un appareil de commande (250) du dispositif d'entraînement (200) étant conçu pour mettre en œuvre un procédé selon l'une des revendications 1 à 12, de sorte que l'appareil de commande (250) est conçu pour

   • détecter une vitesse de rotation de l'axe de pédalier (106) au moyen d'un capteur de vitesse de rotation, et
   • commander le moteur électrique de commande (210) en fonction de la vitesse de rotation détectée de l'axe de pédalier (106) afin de générer une vitesse de rotation du moteur de commande afin de régler un rapport de transmission entre l'axe de pédalier (106) et le pignon de sortie (108), la vitesse de rotation du moteur de commande étant ajustée dans un intervalle de temps de vingt millisecondes après une modification de la vitesse de rotation détectée,
   • l'engrenage planétaire (220) est agencé autour de l'axe de pédalier (106), coaxialement à celui-ci,
   • l'axe de pédalier (106) est solidaire en rotation au porte-satellites (223) de l'engrenage planétaire (220),
   • le moteur électrique de commande (210) est relié à la couronne (224) de l'engrenage planétaire (220), en étant en prise avec celle-ci, par l'intermédiaire du réducteur de vitesse (260), la couronne (224) présentant en outre une denture extérieure, et
   • la roue solaire (221) de l'engrenage planétaire (220) est agencée de manière solidaire en rotation sur un arbre creux de sortie (270) s'étendant coaxialement autour de l'axe de l'axe de pédalier (106) et cet arbre creux de sortie (270) est relié de manière solidaire en rotation au pignon de sortie (108) du dispositif d'entraînement (200).

14. Dispositif d'entraînement (200) selon la revendication 13, dans lequel l'appareil de commande (250) est conçu de façon à maintenir constant un rapport de réglage entre la vitesse de rotation détectée de l'axe de pédalier (106) et la vitesse de rotation du moteur de commande au moins pendant un quart de tour de l'axe de pédalier (106).

15. Dispositif d'entraînement (200) selon l'une des revendications 13 ou 14, dans lequel le capteur (285) de vitesse de rotation comprend un codeur incrémental mécanique, optique, inductif et/ou électrique ou un système de mesure fonctionnant en continu, le capteur (285) de vitesse de rotation étant conçu pour détecter une variation de vitesse de rotation en moins de 20 millisecondes.

16. Dispositif d'entraînement (200) selon la revendication 15, dans lequel le capteur (285) de vitesse de rotation est relié à l'axe de pédalier (106) au moyen d'un étage de transmission à haut rendement (280).

17. Dispositif d'entraînement (200) selon l'une des revendications 13 à 16, dans lequel l'appareil de commande (250) est conçu de façon à

   • enregistrer une entrée opérée par le cycliste pour un rapport de transmission souhaité entre l'axe de pédalier (106) et le pignon de sortie (108) au moyen d'un sélecteur de vitesse (230), le sélecteur de vitesse (230) étant agencé en particulier sur le guidon (110) du vélo (100), et
   • adapter le rapport de réglage entre la vitesse de rotation détectée de l'axe de pédalier (106) et la vitesse de rotation du moteur de commande en fonction de l'entrée détectée opérée par le cycliste.

18. Dispositif d'entraînement (200) selon l'une des revendications 13 à 17, l'appareil de commande (250) étant conçu de façon à

   • adapter le rapport de réglage entre la vitesse de rotation détectée de l'axe de pédalier (106) et la vitesse de rotation du moteur de commande en fonction de la vitesse de rotation détectée et/ou d'un couple détecté exercé par le cycliste au moyen d'un capteur de couple (520) sur l'axe de pédalier (106), le rapport de réglage étant notamment adapté

    i. si la vitesse de rotation détectée tombe en dessous d'une valeur seuil inférieure de vitesse de rotation, et/ou
    ii. si le couple détecté exercé par le cycliste tombe en dessous d'une valeur seuil inférieure de couple exercé par le cycliste,
    et/ou
    iii. si la vitesse de rotation détectée dépasse une valeur seuil supérieure de vitesse de rotation, et/ou
    iv. si le couple détecté exercé par le cycliste dépasse une valeur seuil supérieure de couple exercé par le cycliste.

**19.** Dispositif d'entraînement (200) selon l'une des revendications 13 à 18, dans lequel l'appareil de commande (250) est conçu de façon à

    • détecter une vitesse du vélo (100), en particulier au moyen d'un capteur de vitesse, par exemple un capteur Reed sur la roue avant ou arrière et/ou au moyen d'un capteur de position pour un système mondial de navigation par satellite, et/ou
    • détecter une pente d'un parcours, en particulier au moyen d'une unité de mesure inertielle, et
    • adapter le rapport de réglage entre la vitesse de rotation de l'axe de pédalier et le vitesse de rotation du moteur de commande en fonction de la vitesse détectée du vélo et/ou de la pente détectée du parcours.

**20.** Dispositif d'entraînement (200) selon l'une des revendications 13 à 19, dans lequel l'appareil de commande (250) est conçu de façon à

    • détecter au moins une position actuelle de la manivelle de pédale, en particulier au moyen d'un capteur de position de manivelle de pédale, d'un codeur incrémental mécanique, optique, inductif et/ou électrique ou d'un système de mesure fonctionnant en continu pour détecter une modification angulaire de l'axe de pédalier, et
    • adapter le rapport de réglage en fonction de la position actuelle détectée de la manivelle de pédale.

**21.** Dispositif d'entraînement (200) selon l'une des revendications 13 à 20, dans lequel
le dispositif d'entraînement (200) comprend un autre moteur électrique d'entraînement (240), le moteur électrique d'entraînement (240)

    i. étant relié au composant de sortie (221) de l'engrenage planétaire, ou
    ii. étant relié au deuxième composant d'entrée (223) de l'engrenage planétaire, ou
    iii. étant agencé sur un moyeu de roue avant ou arrière du vélo (100), dans lequel

        • le dispositif d'entraînement (200), en particulier l'appareil de commande (250), est conçu de façon à détecter le couple exercé par le cycliste sur l'axe de pédalier au moyen d'un capteur de couple (520), et
        • le moteur électrique d'entraînement (240) est conçu pour être commandé en fonction du couple détecté exercé par le cycliste, notamment au moyen de l'appareil de commande (250).

**22.** Dispositif d'entraînement (200) selon la revendication 21, dans lequel les capteurs de position du rotor du moteur électrique d'entraînement (240) sont utilisés comme capteur de vitesse (280) pour détecter la vitesse de rotation de l'axe de pédalier (106).

**23.** Dispositif d'entraînement (200) selon l'une des revendications 21 ou 22, dans lequel

    • le dispositif d'entraînement (200) est conçu de façon à détecter la vitesse du vélo au moyen d'un capteur de vitesse, et
    • le moteur électrique d'entraînement (240) est conçu de façon à être commandé en fonction de la vitesse du vélo détectée.

**24.** Dispositif d'entraînement (200) selon l'une des revendications 14 à 23, dans lequel l'appareil de commande (250) est conçu de façon à

    • détecter une entrée opérée par le cycliste pour le fonctionnement du générateur, et/ou
    • détecter une pente du parcours, en particulier au moyen d'une unité de mesure inertielle, et

• détecter une vitesse du vélo au moyen d'un capteur de vitesse, et

• commuter le moteur électrique de commande (210) et/ou le moteur électrique d'entraînement (240) dans un mode de fonctionnement générateur en fonction de l'entrée détectée opérée par le cycliste pour le fonctionnement générateur et/ou de la pente détectée du parcours et en fonction de la vitesse détectée du vélo (100), l'axe de pédalier (106) étant en particulier immobilisé de manière supplémentaire.

25. Dispositif d'entraînement (200) selon l'une des revendications 14 à 24, l'appareil de commande (250) étant conçu de façon à

• détecter une entrée opérée par le cycliste pour un fonctionnement manuel souhaité sans assistance électrique, et/ou

• détecter l'état de charge actuel d'un module de batterie (300) du vélo (100), et

• fixer le premier composant d'entrée (224) de l'engrenage planétaire (220), en particulier au moyen d'un disque de frein (226) relié de manière solidaire en rotation au premier composant d'entrée (224), en fonction de l'entrée détectée opérée par le cycliste pour un fonctionnement manuel souhaité et/ou en fonction de l'état de charge actuel détecté du module de batterie (300), en particulier au moyen d'un frein (225).

26. Vélo (100) avec un dispositif d'entraînement (200) selon l'une des revendications 13 à 25.

**Fig. 1**

**Fig. 2**

**Fig. 3**

# Fig. 4

# Fig. 5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016207035 A1
- DE 102013012160 A1
- WO 2010092331 A1
- EP 2841328 B1
- DE 102013012208 B4
- EP 3395663 A1